# EUROPÄISCHE PATENTSCHRIFT

(11) **EP 4 158 317 B1**
(45) Veröffentlichungstag und Bekanntmachung des Hinweises auf die Patenterteilung: **09.04.2025**
(21) Anmeldenummer: 21729434.7
(22) Anmeldetag: 25.05.2021
(51) Int. Cl.: G01N 21/64, G02B 21/16, G02B 21/00, G02B 5/18

(54) **VERFAHREN, COMPUTERPROGRAMM UND VORRICHTUNG ZUM BESTIMMEN VON POSITIONEN VON MOLEKÜLEN IN EINER PROBE**
METHOD, COMPUTER PROGRAM, AND DEVICE FOR DETERMINING POSITIONS OF MOLECULES IN A SAMPLE
PROCÉDÉ, PROGRAMME INFORMATIQUE, ET DISPOSITIF DE DÉTERMINATION DE POSITIONS DE MOLÉCULES DANS UN ÉCHANTILLON

(30) Priorität: 26.05.2020 DE 102020113998
(43) Veröffentlichungstag der Anmeldung: 05.04.2023
(73) Patentinhaber: Abberior Instruments GmbH, 37077 Göttingen (DE)
(72) Erfinder: FISCHER, Joachim, 76228 Karlsruhe (DE); HENRICH, Matthias, 69115 Heidelberg (DE); WILLEMER, Winfried, 37120 Bovenden (DE)
(74) Vertreter: Schmidt-Uhlig, Thomas
(86) Internationale Anmeldenummer: PCT/EP2021/063788
(87) Internationale Veröffentlichungsnummer: WO 2021/239679

(56) Entgegenhaltungen:
- EP-A1- 1 662 296
- CN-A- 108 181 235

## Beschreibung

Die vorliegende Erfindung betrifft ein Verfahren, ein Computerprogramm mit Instruktionen sowie eine Vorrichtung zum parallelisierten Bestimmen von Positionen von Molekülen in einer Probe. Insbesondere betrifft die vorliegende Erfindung ein Verfahren, ein Computerprogramm mit Instruktionen sowie eine Vorrichtung zum parallelisierten Bestimmen von Positionen von zwei oder mehr gleichzeitig aktiven, voneinander beabstandeten Molekülen in einer oder mehreren Raumrichtungen in einer Probe mittels eines Lokalisationsmikroskops, wobei für das Bestimmen der Positionen der Moleküle Lichtverteilungen verwendet werden, die aufgrund von Interferenz kohärenten Lichts entstehen. Die vorliegende Erfindung betrifft zudem ein Lokalisationsmikroskop, das eine erfindungsgemäße Vorrichtung verwendet.

Bei der MINFLUX-Mikroskopie handelt es sich um eine technische Umsetzung der Lokalisationsmikroskopie. Die Lokalisation von Fluorophoren in einer Probe erfolgt mittels strukturierter Anregungslichtverteilungen. Die Bezeichnung MINFLUX leitet sich ab aus dem zugrundeliegenden Konzept, die Koordinaten eines Moleküls mit einer minimalen Anzahl an Fluoreszenzphotonen zu bestimmen (englisch: MINimal emission FLUXes). Die grundlegende Besonderheit der MINFLUX-Mikroskopie ist, dass die Anregung der Fluorophore jeweils so erfolgt, dass ein zu lokalisierendes Fluorophor immer nah an einem oder in einem Minimum der Anregungslichtverteilung, welches idealerweise eine Nullstelle ist, platziert ist, wobei die Anregungslichtverteilung benachbart zum Minimum einen Intensitätsanstiegsbereich aufweisen muss. Hierdurch wird eine bessere Ausnutzung der Fluoreszenzphotonen hinsichtlich der Gewinnung von Information über die Lage des jeweiligen emittierenden Fluorophors erreicht. Dies gilt auch für Anwendungen, in denen die Bewegung von Fluorophoren über die Zeit verfolgt werden soll. Grundlagen der MINFLUX-Mikroskopie sind aus DE 10 2011 055 367 B4, US 2014/0042340 A1 und DE 10 2013 114 860 B3 bekannt.

DE 10 2011 055 367 B4 beschreibt ein Verfahren zum Verfolgen einer Bewegung eines Partikels in einer Probe. Bei dem Verfahren wird der Partikel mit Licht zur Emission von Photonen veranlasst und von dem Partikel emittierte Photonen werden registriert. Dabei wird das Licht mit einer ein räumlich begrenztes Minimum aufweisenden Intensitätsverteilung auf die Probe gerichtet. Das Minimum wird dem sich in der Probe bewegenden Partikel nachgeführt, indem die Intensitätsverteilung so gegenüber der Probe verschoben wird, dass eine Rate der von dem Partikel emittierten Photonen minimal bleibt.

In US 2014/0042340 A1 ist ergänzend beschrieben, dass aus den Spuren verfolgter Partikel Bilder auf Basis der Verweildauern der Partikel in Abschnitten der Probe gewonnen werden können. Weiter ist in dieser Schrift beschrieben, dass zum Verfolgen von Partikeln sinnvoll auch eine Kombination einer Anregungslichtverteilung mit einer Ausschaltlichtverteilung, insbesondere einer Verteilung von Licht, das angeregte Fluorophore durch stimulierte Emission abregt, verwendet werden können. Hierbei sollen lokale zentrale Minima beider Lichtverteilung aufeinanderfallen. Beim Verfolgen des Partikels, welches sich immer im gemeinsamen Minimum beider Lichtverteilungen befindet, werden andere Fluorophore, die in den Einflussbereich der Lichtverteilungen gelangen, gehindert, Fluoreszenzlicht zu emittieren, sodass die Verfolgung des zu verfolgenden Partikels nicht gestört wird.

DE 10 2013 114 860 B3 beschreibt ein Verfahren zur Bestimmung der Orte einzelner Moleküle einer Substanz in einer Probe. Die einzelnen Moleküle befinden sich in einem fluoreszenten Zustand und werden mit Anregungslicht zur Emission von Fluoreszenzlicht angeregt, wobei eine Intensitätsverteilung des Anregungslichts mindestens eine Nullstelle aufweist. Das Fluoreszenzlicht von den angeregten einzelnen Molekülen wird für verschiedene Positionen der mindestens einen Nullstelle der Intensitätsverteilung des Anregungslichts registriert. Dann werden die Orte der einzelnen Moleküle aus dem Verlauf der Intensität des Fluoreszenzlichts über den Positionen der mindestens einen Nullstelle der Intensitätsverteilung des Anregungslichts abgeleitet.

Auf Basis dieser Grundlagen sind eine Reihe von Verfeinerungen zur Informationsgewinnung entstanden. Eine ausführliche Darstellung zur MINFLUX-Mikroskopie findet sich in "Nanometer resolution imaging and tracking of fluorescent molecules with minimal photon fluxes" von F. Balzarotti et al. [1]. Grundsätzlich muss, um ein Fluorophor mittels MINFLUX-Mikroskopie lokalisieren zu können, das Intensitätsminimum bzw. die Intensitätsnullstelle an einer Mehrzahl von Positionen relativ zur Lage des Fluorophors platziert werden. Hierfür muss in einem vorbereitenden Schritt eine Position des Fluorophors mit einer ersten, geringeren Genauigkeit abgeschätzt werden. Dies kann mittels gewöhnlicher Lokalisationsmikroskopie geschehen, wie z.B. PALM (Photoaktivierte Lokalisationsmikroskopie) oder STORM (Stochastische Optische Rekonstruktionsmikroskopie), oder mittels anderer bekannter Verfahren, wie z.B. solcher auf Basis der Anwendung strukturierter Beleuchtung. Anschließend wird eine Intensitätsverteilung von Anregungslicht an einer bekannten Position platziert, die derart gewählt ist, dass das Fluorophor nah am Minimum der Intensitätsverteilung liegt. Die Fluoreszenzantwort des Fluorophors wird gemessen. Dasselbe wird für eine oder mehrere weitere Positionen der Intensitätsverteilung wiederholt. Mittels einer Auswertung der Intensitätsverhältnisse ähnliche einem Triangulationsverfahren kann die Position des Fluorophors genauer bestimmt werden. Grundsätzlich steigt die Emissionsrate, je weiter das Fluorophor vom Anregungsminimum entfernt ist bzw. je weiter das Fluorophor in einen Intensitätsanstiegsbereich hinein verschoben ist. Diese genauer bestimmte Position kann nun als Ausgangsposition für eine Wiederholung der Abfolge der vorgenannten Schritte verwendet werden, wobei die Positionen dichter an die abgeschätzte Position des Fluorophors gelegt werden können. Insbesondere mit Blick auf die Verfolgung der Bewegung von Fluorophoren kann auch die Veränderung der Emissionsrate bei einer Verlagerung des Fluorophors in den Intensitätsanstiegsbereich hinein oder zum Minimum hin genutzt werden, um die Verlagerung des Fluorophors abzuschätzen.

Einige Aspekte der MINFLUX-Mikroskopie sind in US 2019/0235220 A1, US 2019/0234882 A1 und US 2019/0234879 A1 offenbart.

US 2019/0235220 A1 beschreibt ein Verfahren zur Bestimmung der Lage des Fluorophors, bei dem nur eine geringe oder minimale Anzahl von Positionen benötigt wird, an denen ein Intensitätsminimum platziert wird. Das Intensitätsminimum ist in jeder Raumrichtung, in der eine Lage des Fluorophors bestimmt werden soll, beiderseits von Intensitätsanstiegsbereichen benachbart.

US 2019/0234882 A1 beschreibt ein Verfahren, bei dem die aus einem ersten MINFLUX-Schritt gewonnene Ortsinformation genutzt wird, um in einem Folgeschritt das Minimum der Intensitätslichtverteilung jeweils näher an dem Fluorophor zu platzieren und hieraus genauere Ortsinformation abzuleiten.

US 2019/0234879 A1 beschreibt ein Verfahren, bei dem das Intensitätsminimum sehr schnell an einer Mehrzahl von Positionen um die abgeschätzte Lage des Fluorophors herum platziert wird. Eine einzelne Position wird dann näher an das vermutete Minimum herangeschoben, wenn an ihr eine erhöhte Emissionsrate festgestellt wird. Ein solches Verfahren ist insbesondere für die Beobachtung der Bewegung von Fluorophoren geeignet.

Mittels MINFLUX-Mikroskopie konnte die Position von Fluorophoren in zwei Raumrichtungen experimentell mit einer Unsicherheit von nur 1 nm bestimmt werden, d.h. die Genauigkeit der Lagebestimmung ist vergleichbar mit der Ausdehnung der Fluorophore selbst. Soll die Lage eines einzelnen Fluorophors mit einer gegebenen Messunsicherheit bestimmt werden, so wird hierfür eine geringere Zeit benötigt als bei einer Lagebestimmung mittels herkömmlicher Lokalisationsmikroskopie. Ein Nachteil der MINFLUX-Mikroskopie ist allerdings, dass bisher eine Lagebestimmung einer Vielzahl von Fluorophoren einen großen Zeitaufwand erfordert.

Bei allen Verfahren der Lokalisationsmikroskopie werden die Positionen einzelner Fluorophore hochgenau bestimmt. Aus der Menge vieler solcher Lokalisationen kann dann ein Bild der Probe aufgebaut werden, welches eine Auflösung aufweist, die sehr viel feiner ist als die durch das Abbe-Limit gegebene Grenzauflösung für Weitfeldabbildungen. Derart fein auflösende Mikroskopieverfahren werden als superauflösende Mikroskopieverfahren oder auch als Nanoskopieverfahren bezeichnet.

Ein weiteres Mikroskopieverfahren, das eine Auflösung leicht unterhalb des klassischen Abbe-Limits ermöglicht bzw. konkret die Auflösung halb so großer Strukturen erlaubt wie nach dem Abbe-Limit, ist unter dem Begriff SIM bekannt (SIM: Structured Illumination Microscopy; Mikroskopie mit strukturierter Beleuchtung), z.B. aus dem Artikel "Surpassing the lateral resolution limit by a factor of two using structured illumination microscopy" von M. G. L. Gustafsson [2]. Hier wird eine Probe im Weitfeld mit einer periodisch variierenden Intensitätsverteilung beaufschlagt, deren Periode ungefähr dem Beugungslimit des Abbildungssystems entspricht. Die resultierende Fluoreszenz wird auf einem Weitfelddetektor abgebildet. Anschließend wird die Intensitätsverteilung relativ zur Probe um weniger als die Periode des Musters in der Probe verschoben, typischerweise um ein Drittel der Periode, und es wird erneut ein Bild aufgenommen. Diese Schritte werden ein weiteres Mal wiederholt. Die aufgenommenen Fluoreszenzbilder unterscheiden sich voneinander, wobei dieser Unterschied aus der bekannten Verschiebung der Beleuchtungslichtverteilung relativ zu der unbekannten, aber für alle Bilder identischen Verteilung der Fluorophore herrührt. Aus der Menge der Bilder kann die unbekannte Verteilung der Fluorophore berechnet werden. Um eine Auflösung in mehreren Raumrichtungen zu erhalten, muss das Gitter rotiert werden. Eine Erweiterung dieses Verfahrens hin zu einer zumindest theoretisch unbegrenzten Auflösung wird unter der Bezeichnung SSIM (SSIM: Saturated Structured Illumination Microscopy; Mikroskopie mit strukturierter Beleuchtung und Saturierung) im Artikel "Nonlinear structured-illumination microscopy: Wide-field fluorescence imaging with theoretically unlimited resolution" von M. G. L. Gustafsson [3] beschrieben.

Ein weiteres Konzept zur Erzielung von Superauflösung wird als ROSE bezeichnet (ROSE: Repetitive Optical Selective Exposure; Repetitive optische selektive Belichtung), ist z.B. aus dem Artikel "Molecular resolution imaging by repetitive optical selective exposure" von L. Gu et al. [4] bekannt. Bei diesem Ansatz, der Lokalisationsmikroskopie mit strukturierter Beleuchtung verbindet, werden vereinzelte Fluoreszenzmoleküle sequentiell mit mehreren streifenförmigen Intensitätsverteilungen, die auf Interferenzen beruhen, angeregt und auf Basis der sequentiell detektierten Fluoreszenz mittels einer ratiometrischen Ortsbestimmung lokalisiert. Dies ermöglicht eine etwa zweifache Verbesserung der Lokalisierungspräzision im Vergleich zur konventionellen lokalisationsmikroskopischen Bildgebung mit demselben Photonenbudget. Zur Generierung der Interferenzstreifenmuster wird ein Laserstrahl mit einem Amplitudenmodulator moduliert und aufgeteilt. Eine schnelle Detektion wird durch eine Umschalteinrichtung im Detektionslichtpfad ermöglicht, die das Fluoreszenzlicht zu den einzelnen Intensitätsverteilungen einer Anregungssequenz jeweils auf unterschiedliche Bereiche ein und desselben CCD-Detektors (CCD: Charge Coupled Device; ladungsgekoppeltes Bauelement) leitet.

Der Artikel "SIMPLE: Structured illumination based point localization estimator with enhanced precision" von L. Reymond et al. [5] beschreibt unter dem Begriff SIMPLE (SIMPLE: Structured Illumination based Point Localization Estimator; auf strukturierter Beleuchtung basierender Punktlokalisierungsschätzer) ebenfalls einen Ansatz, der im Vergleich zu konventionellen Schwerpunkt-Schätzmethoden eine zweifache Steigerung der Lokalisierungspräzision einzelner Moleküle erreicht. Auch SIMPLE kombiniert das SIM-Konzept mit einer ratiometrischen Ortsbestimmung, indem es präzise phasenverschobene Sinuswellenmuster als nanometrische Lineale für die gleichzeitige Teilchenlokalisierung auf der Grundlage der Variation der Photonenzahl über ein 20 µm großes Sichtfeld verwendet. Die Sinuswellenmuster werden mit Hilfe eines Mikrospiegelaktors erzeugt.

Der Artikel "Localization microscopy at doubled precision with patterned illumination" von J. Cnossen et al. [6] beschreibt einen Ansatz, genannt SIMFLUX, der die Schwerpunkt-Schätzung und durch ein sinusförmiges Beleuchtungsmuster induzierte Variationen der Photonenzahl in einer konventionellen Weitfeld-Bildgebungseinrichtung kombiniert, um Positionsinformationen über ein typisches Sichtfeld im Mikrometerbereich zu extrahieren. Beim Lokalisieren wird zusätzlich zur Ortsinformation auf einer Kamera noch die Information über die jeweilige Lage des Anregungs-Intensitätsmusters zum Detektionszeitpunkt genutzt. Die Autoren stellen fest, dass dann, wenn die Lage der Anregungs-Intensitätsmuster nicht über eine volle Periode verschoben wird, sondern nur über einen kleineren Bereich, im Prinzip dieselbe Auflösungserhöhung wie bei MINFLUX erreicht werden könne. Gemäß der zugehörigen Supplementary Note gilt dies für Fluorophore, die eine bestimmte Lage relativ zur mittleren Phase des verwendeten Anregungs-Intensitätsmusters aufweisen.

US 2019/0353912 A1 beschreibt eine Vorrichtung zur Strahlformung und -abtastung. Die Vorrichtung umfasst eine digitale Mikrospiegelvorrichtung (DMD) mit einer Vielzahl von Mikrospiegeln. Mit der Mikrospiegelvorrichtung können eine axiale Position eines Brennpunkts eines Laserstrahls entlang einer Ausbreitungsrichtung des Laserstrahls und eine seitliche Position des Brennpunkts auf einer Ebene senkrecht zur Bewegungsrichtung eingestellt werden. Die Vorrichtung kann beispielsweise in der superauflösenden Mikroskopie verwendet werden.

CN 108 181 235 A beschreibt ein parallelisiertes STED-Mikroskopieverfahren (STED: Stimulated Emission Depletion; stimulierte Fluoreszenzlöschung), das auf einer gleichmäßigen strukturierten Beleuchtung basiert. Das Mikroskopieverfahren verwendet für die Beleuchtung einer Probe ein Anregungsmuster, das mit einem STED-Muster überlagert ist.

EP 1 662 296 A1 beschreibt ein System zur räumlichen Lichtmodulation, das in der Lage ist, den einzelnen Komponenten des einfallenden Lichts unterschiedliche räumliche Lichtintensitäten zu verleihen und die Farbeigenschaften des austretenden Lichts zu verändern. Als mögliche Anwendung des Systems wird ein STED-System genannt.

Es ist eine Aufgabe der Erfindung, verbesserte Lösungen für das parallelisierte Bestimmen von Positionen von Molekülen in einer Probe bereitzustellen, durch die der Zeitaufwand für die Positionsbestimmung einer Vielzahl von Fluorophoren reduziert wird.

Diese Aufgabe wird durch ein Verfahren mit den Merkmalen des Anspruchs 1, durch ein Computerprogramm mit Instruktionen mit den Merkmalen des Anspruchs 13, durch eine Vorrichtung mit den Merkmalen des Anspruchs 14 sowie durch ein Mikroskop mit den Merkmalen des Anspruchs 15 gelöst. Bevorzugte Ausgestaltungen der Erfindung sind Gegenstand der abhängigen Ansprüche.

Gemäß einem ersten Aspekt der Erfindung umfasst ein Verfahren zum parallelisierten Bestimmen von Positionen von zwei oder mehr gleichzeitig aktiven, voneinander beabstandeten Molekülen in einer oder mehreren Raumrichtungen in einer Probe mittels eines Lokalisationsmikroskops, wobei für das Bestimmen der Positionen der Moleküle Lichtverteilungen verwendet werden, die aufgrund von Interferenz kohärenten Lichts entstehen, die Schritte:
- Erzeugen einer Mehrzahl von Lichtverteilungen unter Verwendung eines ersten Lichtmodulators mit einer Vielzahl von schaltbaren Pixeln, der in einer Bildebene des Lokalisationsmikroskops angeordnet ist, wobei jede Lichtverteilung ein lokales Intensitätsminimum und daran angrenzend Intensitätsanstiegsbereiche aufweist;
- Beleuchten jedes der zwei oder mehr Moleküle mit jeweils einer Lichtverteilung;
- für jede der Lichtverteilungen, Erfassen von durch die Moleküle emittierten Photonen für verschiedene Positionierungen der Lichtverteilung, wobei die Lichtverteilungen durch eine entsprechende Ansteuerung des ersten Lichtmodulators unabhängig voneinander positioniert werden; und
- Ableiten der Positionen der Moleküle auf Basis der für die verschiedenen Positionierungen der Lichtverteilungen erfassten Photonen.

Gemäß einem weiteren Aspekt der Erfindung enthält ein Computerprogramm Instruktionen, die bei Ausführung durch einen Computer den Computer zur Ausführung der folgenden Schritte zum parallelisierten Bestimmen von Positionen von zwei oder mehr gleichzeitig aktiven, voneinander beabstandeten Molekülen in einer oder mehreren Raumrichtungen in einer Probe mittels eines Lokalisationsmikroskops veranlassen, wobei für das Bestimmen der Positionen der Moleküle Lichtverteilungen verwendet werden, die aufgrund von Interferenz kohärenten Lichts entstehen:
- Erzeugen einer Mehrzahl von Lichtverteilungen unter Verwendung eines ersten Lichtmodulators mit einer Vielzahl von schaltbaren Pixeln, der in einer Bildebene des Lokalisationsmikroskops angeordnet ist, wobei jede Lichtverteilung ein lokales Intensitätsminimum und daran angrenzend Intensitätsanstiegsbereiche aufweist;
- Beleuchten jedes der zwei oder mehr Moleküle mit jeweils einer Lichtverteilung;
- für jede der Lichtverteilungen, Erfassen von durch die Moleküle emittierten Photonen für verschiedene Positionierungen der Lichtverteilung, wobei die Lichtverteilungen durch eine entsprechende Ansteuerung des ersten Lichtmodulators unabhängig voneinander positioniert werden; und
- Ableiten der Positionen der Moleküle auf Basis der für die verschiedenen Positionierungen der Lichtverteilungen erfassten Photonen.

Der Begriff Computer ist dabei breit zu verstehen. Insbesondere umfasst er auch Mikrocontroller, eingebettete Systeme und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung umfasst eine Vorrichtung zum parallelisierten Bestimmen von Positionen von zwei oder mehr gleichzeitig aktiven, voneinander beabstandeten Molekülen in einer oder mehreren Raumrichtungen in einer Probe mittels eines Lokalisationsmikroskops, wobei für das Bestimmen der Positionen der Moleküle Lichtverteilungen verwendet werden, die aufgrund von Interferenz kohärenten Lichts entstehen:
- eine Steuereinheit, die eingerichtet ist zum Ansteuern eines ersten Lichtmodulators mit einer Vielzahl von schaltbaren Pixeln, der in einer Bildebene des Lokalisationsmikroskops angeordnet ist, zum Erzeugen einer Mehrzahl von durch eine entsprechende Ansteuerung des ersten Lichtmodulators unabhängig voneinander positionierbaren Lichtverteilungen, wobei jede Lichtverteilung ein lokales Intensitätsminimum und daran angrenzend Intensitätsanstiegsbereiche aufweist; und
- eine Auswerteeinheit, die eingerichtet ist zum Ableiten der Positionen der Moleküle auf Basis von durch die Moleküle für jede der Lichtverteilungen emittierten Photonen für verschiedene Positionierungen der jeweiligen Lichtverteilungen.

Bei der erfindungsgemäßen Lösung wird eine Mehrzahl von Lichtverteilungen genutzt, um die Positionsbestimmung von Molekülen bzw. Fluorophoren mittels eines Lokalisationsmikroskops zu parallelisieren. Zu diesem Zweck werden die einzelnen Lichtverteilungen mittels eines Lichtmodulators erzeugt, der in einer Bildebene des Lokalisationsmikroskops angeordnet ist. Die Lichtverteilungen können durch eine entsprechende Ansteuerung des Lichtmodulators dabei unabhängig voneinander positioniert werden. Durch die parallelisierte Erfassung der Moleküle reduziert sich der Zeitaufwand für die Abtastung einer Probe erheblich. Die erfassten Moleküle bzw. Fluorophore müssen für die Erfassung gleichzeitig aktiv sein und einen Abstand haben, der eine gleichzeitige beugungslimitierte Detektion ermöglicht. Bei den Lichtverteilungen ist ein minimaler Abstand erforderlich. Weisen in Zeitabschnitten in Bereichen der Probe aktive Moleküle hierfür zu kleine Abstände auf, so werden diese in diesen Zeitabschnitten nicht beobachtet. Es werden bei der erfindungsgemäßen Lösung jeweils Moleküle bzw. Fluorophore beobachtet, die so weit voneinander entfernt sind, dass sich die Lichtverteilungen nicht berühren.

Die MINFLUX-Mikroskopie wird typischerweise mit Fluorophoren durchgeführt, die "blinken", d.h. zwischen fluoreszenzfähigen und nicht-fluoreszenzfähigen Zuständen wechseln. Dieser Wechsel zwischen den Zuständen kann dabei entweder bei fest eingestellten Umgebungsbedingungen rein zufällig erfolgen oder aber durch einen Schaltprozess, z.B. durch ein Deaktivierungslicht oder durch ein Aktivierungslicht oder durch eine Kombination eines Deaktivierungslichts zur Deaktivierung aller Moleküle und eines Aktivierungslichts, durch das wenige Moleküle aktiviert werden, induziert werden. So ist es möglich, dass jeweils in einem Lokalisationsbereich nur ein Fluorophor fluoreszenzfähig ist, insgesamt aber dennoch die gesamte Probe unter Nutzung der meisten Fluorophore abgebildet werden kann. Geeignete Fluorophore und Methoden zum Schalten schaltbarer Fluorophore sind dem Fachmann bekannt.

Die Anordnung des Lichtmodulators in einer Bildebene hat den Vorteil, dass ein Verschieben der Lichtverteilungen in der Probe durch das direkte Abbilden von Strukturen bzw. Mustern auf dem Lichtmodulator in der Bildebene besonders einfach und somit schnell erreichbar ist: Das individuelle Verschieben der Lichtverteilungen entspricht dem individuellen Verschieben der Muster auf dem Lichtmodulator. Die jeweils erforderliche Verschiebung kann sehr schnell berechnet werden, woraus eine hohe Entscheidungsgeschwindigkeit resultiert.

Gemäß einem Aspekt der Erfindung ist ein zweiter Lichtmodulator zur Beeinflussung der Lichtverteilungen in einer Fourier-Ebene des Lokalisationsmikroskops angeordnet. Insbesondere ist der zweite Lichtmodulator eingerichtet, einzelne Beugungsordnungen zu blockieren. Durch den zweiten Lichtmodulator lassen sich die vom ersten Lichtmodulator erzeugten Lichtverteilungen gezielt weiter beeinflussen. Werden vom ersten Lichtmodulator beispielsweise mehrere Beugungsordnungen generiert, so können durch den zweiten Lichtmodulator diejenigen Beugungsordnungen ausgefiltert werden, die im weiteren Strahlengang nicht verwendet werden sollen. Die Filterung kann dabei situativ angepasst werden, sodass eine große Flexibilität erreicht wird.

Gemäß einem Aspekt der Erfindung ist der erste Lichtmodulator ein Amplitudenmodulator oder ein Phasenmodulator. Vorzugsweise ist der erste Lichtmodulator ein zwischen zwei festen Zuständen schaltbarer Lichtmodulator. Binäre Lichtmodulatoren haben den Vorteil, dass sie sehr schnell sind, während analoge Phasenmodulatoren, wie sie typischerweise bei holographischen Herangehensweisen genutzt werden, deutlich langsamer sind. Der Lichtmodulator kann z.B. als Flüssigkristall-Modulator oder als mikro-elektromechanischer Modulator realisiert sein, insbesondere als Mikrospiegel-Array. Derartige Lichtmodulatoren sind kommerziell verfügbar, einfach zu realisieren und ermöglichen Bildraten von 30 kHz bis 50 kHz. Dabei ist zu erwarten, dass zukünftig noch höhere Bildraten erzielt werden. Beispielhaft kann ein Lichtmodulator mit 1920×1080 oder 2560×1600 schaltbaren Pixeln verwendet werden.

Gemäß einem Aspekt der Erfindung werden zum Erzeugen der Lichtverteilungen mittels der schaltbaren Pixel des ersten Lichtmodulators eindimensionale oder zweidimensionale Strukturen ausgebildet. Vorzugsweise sind die eindimensionalen Strukturen Gitterstrukturen und die zweidimensionalen Strukturen Ringstrukturen. Durch jede eindimensionale Gitterstruktur wird in der Probe eine gitterähnliche Lichtverteilung aus aufeinanderfolgenden Intensitätsmaxima und Intensitätsminima erzielt, mit der die Position z.B. eines Fluorophors in einer Raumrichtung bestimmt werden kann. Für die Positionsbestimmung können insbesondere das zentrale Intensitätsmaximum und eines der beiden benachbarten Intensitätsmaxima oder die beiden hellsten Intensitätsmaxima mit dem zwischen den gewählten Maxima liegenden Intensitätsminimum genutzt werden. Für eine Positionsbestimmung in zwei Raumrichtungen muss zusätzlich eine Lichtverteilung anderer Orientierung bereitgestellt werden. Durch die Ringstrukturen kann eine Lichtverteilung in Form eines sogenannten "Bottle Beams" erzielt werden, d.h. einer Lichtverteilung, die eine in drei Raumrichtungen begrenzte Nullstelle aufweist und mit der eine Positionsbestimmung in drei Raumrichtungen möglich ist. Eine weitere Möglichkeit ist die Erzeugung von Lichtverteilungen in Form eines Donuts, d.h. Lichtverteilungen, die eine in zwei Raumrichtungen begrenzte Nullstelle aufweisen und mit denen eine Positionsbestimmung in zwei Raumrichtungen möglich ist. Zu diesem Zweck können Punkte bzw. Scheiben auf dem ersten Lichtmodulator dargestellt werden. Zusätzlich wird dann ein statischer oder dynamischer Phasenmodulator, wie aus der STED-Mikroskopie bekannt, genutzt, um eine Phasenrampe aufzuprägen.

Gemäß einem Aspekt der Erfindung werden zum Positionieren der Lichtverteilungen die mittels der schaltbaren Pixel des ersten Lichtmodulators ausgebildeten Strukturen verschoben. Die Verschiebungen der Strukturen sind dabei vorzugsweise kleiner als Abmessungen von Strukturelementen der Strukturen, wobei die Abmessungen der Strukturelemente in beiden Dimensionen größer sind als eine Größe der Pixel. Beispielsweise kann eine mit den Pixeln ausgebildete Gitterlinie eine Linienbreite von zehn Pixeln haben. Ist das optische System so ausgestaltet, dass daraus eine Periode der Lichtverteilung in der Probe von 250 nm resultiert, so führt eine Verschiebung der Gitterlinien um einen Pixel zu einer Verschiebung der Lichtverteilung in der Probe von 25 nm.

Gemäß einem Aspekt der Erfindung wird für aufeinanderfolgende Positionsbestimmungen mit einer Lichtverteilung ein Intensitätsverlauf der Lichtverteilung verändert, indem eine Struktureigenschaft der zugehörigen eindimensionalen oder zweidimensionalen Struktur verändert wird. Beispielsweise kann eine Flankensteilheit der an das lokale Intensitätsminimum angrenzenden Intensitätsanstiegsbereiche verändert werden, indem eine Gitterkonstante und/oder ein Aspektverhältnis der eindimensionalen Struktur oder ein Lochdurchmesser der zweidimensionalen Struktur verändert wird. Durch die Änderung der Lichtverteilung für aufeinanderfolgende Positionsbestimmungen bzw. Messungen kann sukzessive die Genauigkeit der Positionsbestimmung erhöht werden. Auf diese Weise kann die Position eines Moleküls oder Fluorophors in iterativen Schritten mit mehreren Zoomstufen zunehmend genauer bestimmt werden. Insbesondere bei Verwendung eines binären Lichtmodulators kann eine solche iterative Positionsbestimmung sehr schnell durchgeführt werden.

Gemäß einem Aspekt der Erfindung resultieren die Lichtverteilungen aus einer zeitlichen Überlagerung verschiedener Teil-Lichtverteilungen. Dazu können beispielsweise in aufeinanderfolgenden Schritten verschiedene Beugungsordnungen eines vom ersten Lichtmodulators erzeugten Interferenzmusters zur Interferenz gebracht werden, wodurch jeweils eine Teil-Lichtverteilung entsteht, die gewissermaßen eine geneigte Achse aufweist. Die Richtung der Neigung hängt davon ab, welche Beugungsordnungen interferieren. Werden die resultierenden Teil-Lichtverteilungen zeitlich überlagert, so entsteht eine dreidimensionale akkumulierte Lichtverteilung, die in axialer Richtung ein Minimum an der Position des Schnittpunkts der geneigten Achsen aufweist, an das Intensitätsanstiegsbereiche angrenzen. Durch eine relative Verschiebung zwischen den beiden Teil-Lichtverteilungen in radialer Richtung, d.h. durch ein Verschieben der zugehörigen Strukturen auf dem ersten Lichtmodulator, kann der Schnittpunkt und damit die Position des Minimums in axialer Richtung verschoben werden. Dies ermöglicht eine außerordentlich schnelle Positionsbestimmung eines Moleküls oder Fluorophors in drei Dimensionen.

Gemäß einem Aspekt der Erfindung wird mittels zumindest einer Lichtverteilung ein Marker in der Probe zum Ermitteln einer Drift erfasst. Alternativ kann aus gleichsinnigen Änderungen der gemessenen Positionen der Moleküle in aufeinanderfolgenden Messungen eine Drift ermittelt werden. Diese Ansätze sind besonders vorteilhaft, wenn nicht nur Positionen von Molekülen, sondern aus aufeinanderfolgenden Messungen die Bewegungen von Molekülen bestimmt werden sollen. Wird eine Bewegung eines fest positionierten Markers erfasst, können damit die gemessenen Bewegungen der Moleküle korrigiert werden. Zu diesem Zweck ist es allerdings erforderlich, einen geeigneten Marker in der Probe bereitzustellen. Bei der MINFLUX-Mikroskopie kann ein solcher Marker z.B. ein Fluorophor sein, da dieses aufgrund des MINFLUX-Prinzips kaum ausbleicht. Zum Bereitstellen eines Markers kann z.B. mit einem Bottle Beam aus einer gefärbten Struktur, z.B. Fasern in einer fixierten Zelle, die mit einem nicht-schaltbaren Fluorophor gefärbt sind, ein Bead herausgebleicht werden. Wird eine bestimmte Stelle für eine Weile beleuchtet, so wird die Faser rund um einen Punkt ausgebleicht. Auf diese Weise kann ein prinzipiell beliebig kleiner, dauerhaft leuchtender Fleck erzeugt werden. Dieser kann beispielsweise eine Größe von 40 nm bis 100 nm haben und dann anschließend schonend unter Nutzung des MINFLUX-Prinzips lokalisiert werden. Alternativ lässt sich aber auch aus einer gleichsinnigen Bewegungen einer Vielzahl von Molekülen ableiten, dass es zu einer relativen Verschiebung zwischen der Probe und dem Messaufbau gekommen ist. Die gemessenen Bewegungen der einzelnen Moleküle können dann um den gleichsinnigen Anteil der Bewegung korrigiert werden.

Gemäß einem Aspekt der Erfindung weisen die Lichtverteilungen in der Probe laterale Abmessungen im Bereich von 0,5 µm bis 4 µm auf. Es hat sich gezeigt, dass bei diesen Abmessungen der Lichtverteilungen in der Probe zuverlässige Positionsbestimmungen erzielt werden und zugleich eine große Anzahl unabhängig voneinander positionierbarer Lichtverteilungen realisiert werden kann.

In einer Ausführungsform der Erfindung kann die Abschätzung der Positionen der aktiven Luminophore bzw. Fluorophore, die der Anwendung der Lokalisation nach dem MINFLUX-Prinzip vorausgeht, erfolgen, indem eine Sequenz von eindimensional gitterförmigen Beleuchtungslichtverteilungen, bevorzugt mittels des ersten Lichtmodulators, erzeugt wird, wobei sich jede Beleuchtungslichtverteilung der Sequenz über eine selbe Mehrzahl vereinzelter Fluorophore erstreckt. Die Positionen der mehreren Fluorophore können bevorzugt nach einem Verfahren, wie es aus dem Stand der Technik als SIMPLE, SIMFLUX oder ROSE bekannt ist, abgeschätzt werden. Anschließend erfolgt dann simultan für eine Mehrzahl der mehreren Fluorophore oder für alle Fluorophore die genauere Lokalisation jeweils nach dem MINFLUX-Prinzip.

In einer Ausführungsform der Erfindung können zunächst mit einer Lichtverteilung einer geeigneten Wellenlänge unter Verwendung geeigneter projizierter Muster Fluorophore gezielt nur in bestimmten Bereichen in einen fluoreszenzfähigen Zustand versetzt werden oder gezielt in Teilbereichen in einem fluoreszenzfähigen Zustand belassen werden. Hierfür können neben den oben beschriebenen Mikrogittern und Donuts auch andere Grundmuster verwendet werden. Insbesondere kann die Lichtverteilung insgesamt oder abschnittsweise ein Punktgitter sein. Außerdem sind kontinuierliche flächige Beleuchtungsmuster mit kontinuierlich variierender akkumulierter Lichtstärke möglich, z.B. indem ein DMD im Graustufen-Betrieb benutzt wird, die an die Dichteverteilung der beobachteten Struktur angepasst sind, sodass eine gewünschte Dichteverteilung an aktivierten Molekülen gezielt erzeugt werden kann. Dabei kann bei Verwendung entsprechender Fluorophore beispielsweise für die Aktivierung bevorzugt derselbe Lichtmodulator in einer Bildebene verwendet werden wie für die folgende Anregung.

Es kann auch eine Abfolge oder eine Kombination verschiedener Lichtverteilungen verwendet werden, beispielsweise eine Abfolge eines Musters von Aktivierungslicht mit einer so angepassten Intensitätsverteilung, dass inaktive Fluorophore in Bereichen der Intensitätsmaxima mit einer geeigneten Wahrscheinlichkeit in einen aktiven Zustand geschaltet werden, und eines korrespondierenden Musters von Deaktivierungslicht, welches in Bereichen der Intensitätsmaxima des Aktivierungslichts Nullstellen aufweist und somit dort Fluorophore in aktivem Zustand belässt. Die Einstellung von Aktivierungslicht derart, dass nur eine geeignete, geringe Menge der Fluorophore aktiviert wird, ist dem Fachmann grundsätzlich bekannt. Anschließend kann dann in den so vorbereiteten Bereichen parallel das MINFLUX-Prinzip genutzt werden.

Es wird also dafür gesorgt, dass von Vornherein recht genau bekannt ist, wo überhaupt Fluorophore in fluoreszenzfähigem Zustand sein können bzw. in welchen Bereichen die Dichte fluoreszenzfähiger Fluorophore für eine Einzelfluorophordetektion geeignet ist, und nutzt dann aus, dass die Teilgitter unabhängig verschoben werden können.

Es kann für jedes der zu lokalisierenden Fluorophore auch eine Kombination einer Anregungslichtverteilung und einer Deaktivierungslichtverteilung vorteilhaft verwendet werden, bei der das Deaktivierungslicht STED-Licht ist. Hierbei decken sich vorteilhaft jeweils mindestens ein lokales zentrales Minimum der STED-Lichtverteilung und das Minimum der Anregungslichtverteilung, welches für die Lokalisation genutzt wird, d.h. innerhalb dessen sich das jeweils zu lokalisierende Fluorophor gemäß der vorgelagerten Ortsabschätzung jeweils befindet. Hierbei müssen sich die Lichtverteilungen nicht vollständig entsprechen. Beispielsweise kann als STED-Lichtverteilung jeweils ein Donut gewählt werden und als Anregungslichtverteilung ein eindimensionales Gitter. Zur Lokalisierung der Fluorophore können dann die Anregungslichtverteilungen und die STED-Lichtverteilungen gleichzeitig umpositioniert, d.h. verschoben und ggf. umorientiert werden, oder es können Anregungslichtverteilungen umpositioniert werden, während die STED-Lichtverteilungen ortsfest belassen werden, sodass Anregungsminima jeweils mehrfach unterschiedlich jeweils innerhalb eines Bereichs eines STED-Minimums positioniert werden, oder es können die Anregungslichtverteilungen ortsfest belassen und die STED-Lichtverteilungen umpositioniert werden. Denkbar sind auch Kombinationen der drei genannten Varianten. Alternativ oder zusätzlich zu der Umpositionierung können auch die Abmessungen und/oder Intensitäten der Lichtverteilungen des Anregungs- und /oder des STED-Lichts geändert werden. Beispielsweise können zu Beginn STED-Donuts mit räumlich weiter ausgedehntem Minimum mit Anregungslichtverteilungen überlagert werden und in folgenden Schritten können diese STED-Donuts z.B. in Abhängigkeit von der bereits erzielten Lokalisationsgenauigkeit verengt werden und/oder ihre Intensität kann erhöht werden. In allen hier genannten Fällen wird für die Erzeugung der Lichtverteilungen der zwei Lichtarten bevorzugt je Lichtart ein Lichtmodulator, der jeweils in einer Bildebene innerhalb eines zugehörigen Anregungs- bzw. STED-Lichtpfades angeordnet ist, verwendet. Die Lichtpfade können in Richtung der Lichtwege gesehen z.B. mittels eines Strahlvereinigers, der ein dichroitisches Bauteil sein kann, vereinigt werden.

In einer weiteren Variante, bei der eine Kombination einer Anregungslichtverteilung und einer Deaktivierungslichtverteilung verwendet wird, bei der das Deaktivierungslicht STED-Licht ist, weisen die STED-Lichtverteilungen lokale Minima auf, nicht aber die Anregungslichtverteilungen. In dieser Variante wird nicht das MINFLUX-Prinzip umgesetzt, die Positionen der zu lokalisierenden Moleküle werden aber dennoch auf Basis der für die verschiedenen Positionierungen der Lichtverteilungen erfassten Photonen bestimmt, bevorzugt mittels eines ratiometrischen Verfahrens. Beispielsweise können Luminophore oder Fluorophore, die in einen Schutzzustand versetzt werden können, verwendet werden. Solche Luminophore und deren Verwendung in einem besonderen STED-Verfahren sind beispielsweise aus WO 2014 108455 A1 bekannt. In einer Ausführungsform der Erfindung werden entsprechende Luminophore, von denen sich im Ausgangszustand der Probe ein Anteil in einem anregbaren Zustand befindet, mit Lichtverteilungen von Schaltlicht, die jeweils ein lokales Minimum aufweisen, im Bereich außerhalb des Minimums zumindest aus dem anregbaren Zustand in einen Schutzzustand geschaltet. Anschließend wird die Probe mit korrespondierenden Lichtverteilungen, die jeweils zusammengesetzt sind aus einer Anregungslichtverteilung und einer STED-Lichtverteilung, beaufschlagt, wobei die STED-Lichtverteilungen jeweils ein Minimum aufweisen, welches örtlich mit einem Minimum einer korrespondierenden Schaltlichtverteilung überlappt. Schaltlicht und STED-Licht können hinsichtlich ihrer Wellenlänge identisch sein. Auf diese Weise wird erreicht, dass mit hoher Wahrscheinlichkeit innerhalb des STED-Minimums nur ein einzelnes Luminophor anregbar ist, welches dann mit einem ratiometrischen Verfahren lokalisierbar ist. Außerhalb des Minimums befindet sich zumindest eine Vielzahl der Luminophore in einem Schutzzustand, in dem sie weder durch das Anregungs- noch durch das STED-Licht gebleicht werden. Durch die Verwendung des STED-Lichts wird verhindert, dass während der Lokalisierung einer einzelnen Gruppe von Fluorophoren ein zu einem Fluorophor der Gruppe benachbartes Fluorophor zufällig in einen anregbaren Zustand wechselt und die Lokalisierung des betreffenden Fluorophors stört oder verhindert.

In entsprechender Weise können auch Fluorophore verwendet werden, die sich im Ausgangszustand in einem Schutzzustand befinden. Diese können dann lokal mittels Aktivierungslichtverteilungen, die bevorzugt ein beugungsbegrenztes zentrales Maximum aufweisen, aktiviert werden und folgend, wie beschrieben, mittels einer Kombination aus Anregungs- und STED-Licht lokalisiert werden. Alternativ kann ihre Lokalisation auch ausschließlich unter Verwendung von Anregungslichtverteilungen erfolgen.

Gemäß einem Aspekt der Erfindung werden die durch die Moleküle emittierten Photonen mit einer Kamera oder einem Array von Photonenzählern erfasst. Die Verwendung einer Kamera hat dabei den Vorteil, dass eine Kamera preisgünstig ist und eine schnelle Auslesung ermöglicht. Die Verwendung von Photonenzählern hat den Vorteil, dass diese sehr effizient bei der Detektion von Photonen sind und zudem eine sehr hohe Zeitauflösung aufweisen. Bei den Photonenzählern kann es sich beispielsweise um Einzelphoton-Avalanche-Dioden (SPAD: Single-Photon Avalanche Diode) handeln.

Gemäß einem weiteren Aspekt der Erfindung umfasst ein erfindungsgemäßes Mikroskop:
- eine Lichtquelle zum Erzeugen von kohärentem Licht;
- einen ersten Lichtmodulator mit einer Vielzahl von schaltbaren Pixeln, der in einer Bildebene des Mikroskops angeordnet ist, zum Erzeugen einer Mehrzahl von Lichtverteilungen, die aufgrund von Interferenz kohärenten Lichts entstehen, wobei jede Lichtverteilung ein lokales Intensitätsminimum und daran angrenzend Intensitätsanstiegsbereiche aufweist;
- optische Mittel zum Beleuchten von zwei oder mehr voneinander beabstandeten Molekülen in einer Probe mit jeweils einer Lichtverteilung;
- eine Detektoreinheit zum Erfassen von durch die Moleküle für jede der Lichtverteilungen emittierten Photonen für verschiedene Positionierungen der Lichtverteilungen, wobei die Lichtverteilungen durch eine entsprechende Ansteuerung des ersten Lichtmodulators unabhängig voneinander positionierbar sind; und
- eine erfindungsgemäße Vorrichtung zum Bestimmen von Positionen der zwei oder mehr Moleküle in einer oder mehreren Raumrichtungen.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein Verfahren zum parallelisierten Bestimmen von Positionen von zwei oder mehr gleichzeitig aktiven, voneinander beabstandeten Molekülen in einer oder mehreren Raumrichtungen in einer Probe;
- Fig. 2: zeigt eine erste Ausführungsform einer Vorrichtung zum parallelisierten Bestimmen von Positionen von zwei oder mehr gleichzeitig aktiven, voneinander beabstandeten Molekülen in einer oder mehreren Raumrichtungen in einer Probe;
- Fig. 3: zeigt eine zweite Ausführungsform einer Vorrichtung zum parallelisierten Bestimmen von Positionen von zwei oder mehr gleichzeitig aktiven, voneinander beabstandeten Molekülen in einer oder mehreren Raumrichtungen in einer Probe;
- Fig. 4: zeigt eine Probe mit einer Vielzahl von Molekülen;
- Fig. 5: zeigt einen Intensitätsverlauf über einen Querschnitt durch eine Lichtverteilung;
- Fig. 6: zeigt einen prinzipiellen Aufbau eines Mikroskops, in dem eine erfindungsgemäße Lösung realisiert ist;
- Fig. 7: veranschaulicht die Realisierung einer Struktur mittels eines Lichtmodulators mit einer Vielzahl von Pixeln;
- Fig. 8: zeigt ein erstes Beispiel für die Erzeugung mehrerer unabhängig voneinander positionierbarer Lichtverteilungen;
- Fig. 9: zeigt ein zweites Beispiel für die Erzeugung mehrerer unabhängig voneinander positionierbarer Lichtverteilungen;
- Fig. 10: zeigt ein Beispiel für die Erzeugung einer Lichtverteilung in Form eines Bottle Beams, der eine in drei Raumrichtungen begrenzte Nullstelle aufweist;
- Fig. 11: zeigt ein Beispiel für die Erzeugung mehrerer unabhängig voneinander positionierbarer Lichtverteilungen in Form von Bottle Beams;
- Fig. 12: zeigt ein Beispiel für die Erzeugung einer Lichtverteilung durch eine zeitliche Überlagerung verschiedener Teil-Lichtverteilungen;
- Fig. 13: zeigt axiale Schnitte durch die für die Überlagerung verwendeten Interferenzmuster; und
- Fig. 14: zeigt axiale Schnitte durch die entsprechend Fig. 12 erzeugte Lichtverteilung für verschiedene relative laterale Verschiebungen der Teil-Lichtverteilungen.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

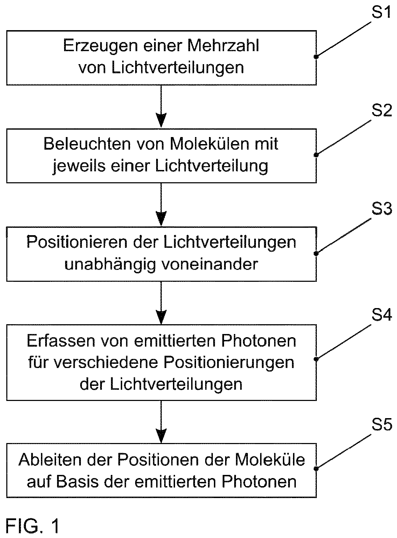

Fig. 1 zeigt schematisch ein Verfahren zum parallelisierten Bestimmen von Positionen von zwei oder mehr gleichzeitig aktiven, voneinander beabstandeten Molekülen in einer oder mehreren Raumrichtungen in einer Probe. Für das Bestimmen der Positionen der Moleküle werden Lichtverteilungen verwendet, die aufgrund von Interferenz kohärenten Lichts entstehen. Bei dem Verfahren wird eine Mehrzahl von Lichtverteilungen unter Verwendung eines ersten Lichtmodulators mit einer Vielzahl von schaltbaren Pixeln erzeugt S1. Der erste Lichtmodulator, z.B. ein Amplitudenmodulator oder ein Phasenmodulator, ist in einer Bildebene eines Lokalisationsmikroskops angeordnet und ist bevorzugt zwischen zwei festen Zuständen schaltbar. Vorzugsweise ist ein zweiter Lichtmodulator zur Beeinflussung der Lichtverteilungen in einer Fourier-Ebene angeordnet, z.B. zum Blockieren einzelner Beugungsordnungen. Jede Lichtverteilung weist ein lokales Intensitätsminimum und daran angrenzend Intensitätsanstiegsbereiche auf. Jedes der zwei oder mehr Moleküle wird mit jeweils einer Lichtverteilung beleuchtet S2. Für jede der Lichtverteilungen werden durch die Moleküle emittierte Photonen für verschiedene Positionierungen der Lichtverteilung erfasst S4. Die Lichtverteilungen werden dabei durch eine entsprechende Ansteuerung des ersten Lichtmodulators unabhängig voneinander positioniert S3. Auf Basis der für die verschiedenen Positionierungen der Lichtverteilungen erfassten Photonen werden schließlich die Positionen der Moleküle abgeleitet S5. Zum Erzeugen S1 der Lichtverteilungen können mittels der schaltbaren Pixel des ersten Lichtmodulators eindimensionale Strukturen, z.B. Gitterstrukturen, oder zweidimensionale Strukturen, z.B. Ringstrukturen, ausgebildet werden. Zum Positionieren S3 der Lichtverteilungen werden dann die ausgebildeten Strukturen verschoben. Die Verschiebungen der Strukturen sind dabei vorzugsweise kleiner als Abmessungen von Strukturelementen der Strukturen, wobei die Abmessungen der Strukturelemente in beiden Dimensionen größer sind als eine Größe der Pixel. Strukturelemente sind im Falle einer Gitterstruktur die Gitterlinien, im Falle einer Ringstruktur der Ring. Die Lichtverteilungen können dabei auch aus einer zeitlichen Überlagerung verschiedener Interferenzmuster kohärenter Lichtstrahlen resultieren. Dazu können beispielsweise in aufeinanderfolgenden Schritten verschiedene Beugungsordnungen eines vom ersten Lichtmodulator erzeugten Interferenzmusters zur Interferenz gebracht werden und die resultierenden Interferenzmuster relativ zueinander in axialer Richtung verschoben werden. Des Weiteren besteht die Möglichkeit, dass für aufeinanderfolgende Positionierungen einer Lichtverteilung ein Intensitätsverlauf der Lichtverteilung verändert wird, indem eine Struktureigenschaft der zugehörigen eindimensionalen oder zweidimensionalen Struktur verändert wird. Beispielsweise kann eine Flankensteilheit der an das lokale Intensitätsminimum angrenzenden Intensitätsanstiegsbereiche verändert werden, indem eine Gitterkonstante der eindimensionalen Struktur oder ein Lochdurchmesser der zweidimensionalen Struktur verändert wird. Die Verfügbarkeit einer Mehrzahl von Lichtverteilungen kann genutzt werden, um eine Drift der Probe zu erfassen und zu kompensieren. Beispielsweise kann mittels zumindest einer Lichtverteilung ein Marker in der Probe erfasst werden. Alternativ kann eine Drift aus gleichsinnigen Änderungen der gemessenen Positionen der Moleküle in aufeinanderfolgenden Messungen ermittelt werden.

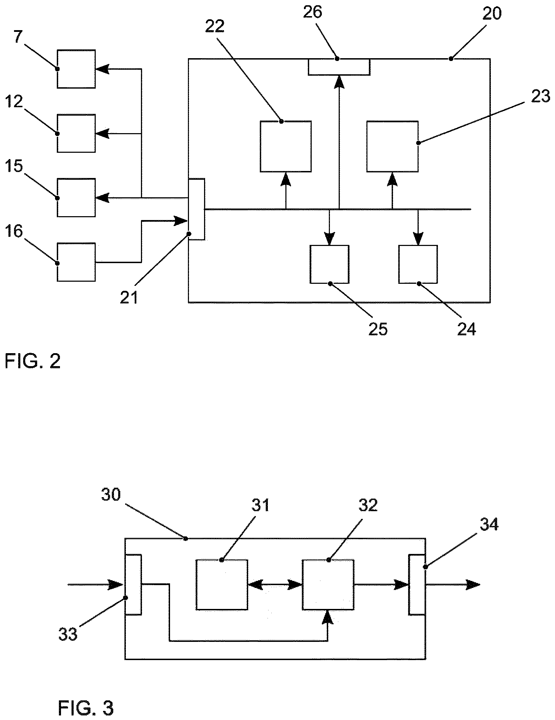

Fig. 2 zeigt eine vereinfachte schematische Darstellung einer ersten Ausführungsform einer Vorrichtung 20 zum parallelisierten Bestimmen von Positionen von zwei oder mehr gleichzeitig aktiven, voneinander beabstandeten Molekülen in einer oder mehreren Raumrichtungen in einer Probe. Die Vorrichtung 20 hat eine Schnittstelle 21, über die eine Steuereinheit 22 einen ersten Lichtmodulator 7 mit einer Vielzahl von schaltbaren Pixeln ansteuert, um eine Mehrzahl von durch eine entsprechende Ansteuerung des ersten Lichtmodulators 7 unabhängig voneinander positionierbaren Lichtverteilungen zu erzeugen. Der erste Lichtmodulator 7, z.B. ein Amplitudenmodulator oder ein Phasenmodulator, ist in einer Bildebene eines Lokalisationsmikroskops angeordnet und ist bevorzugt zwischen zwei festen Zuständen schaltbar. Jede Lichtverteilung weist ein lokales Intensitätsminimum und daran angrenzend Intensitätsanstiegsbereiche auf. Über die Schnittstelle 21 kann die Steuereinheit 22 zudem einen in einer Fourier-Ebene angeordneten zweiten Lichtmodulator 12 zur Beeinflussung der Lichtverteilungen, z.B. zum Blockieren einzelner Beugungsordnungen, und eine Lichtquelle 15 ansteuern. Eine Auswerteeinheit 23 empfängt über die Schnittstelle 21 Daten einer Detektoreinheit 16, mit der durch die Moleküle emittierte Photonen erfasst werden. Auf Basis der durch die Moleküle für jede der Lichtverteilungen emittierten Photonen für verschiedene Positionierungen der jeweiligen Lichtverteilungen leitet die Auswerteeinheit 23 die Positionen der Moleküle ab. Zum Erzeugen der Lichtverteilungen können mittels der schaltbaren Pixel des ersten Lichtmodulators eindimensionale Strukturen, z.B. Gitterstrukturen, oder zweidimensionale Strukturen, z.B. Ringstrukturen, ausgebildet werden. Zum Positionieren der Lichtverteilungen werden dann die ausgebildeten Strukturen verschoben. Die Verschiebungen der Strukturen sind dabei vorzugsweise kleiner als Abmessungen von Strukturelementen der Strukturen, wobei die Abmessungen der Strukturelemente in beiden Dimensionen größer sind als eine Größe der Pixel. Strukturelemente sind im Falle einer Gitterstruktur die Gitterlinien, im Falle einer Ringstruktur der Ring. Die Lichtverteilungen können dabei auch aus einer zeitlichen Überlagerung verschiedener Interferenzmuster kohärenter Lichtstrahlen resultieren. Dazu können beispielsweise in aufeinanderfolgenden Schritten verschiedene Beugungsordnungen eines vom ersten Lichtmodulator erzeugten Interferenzmusters zur Interferenz gebracht werden und die resultierenden Interferenzmuster relativ zueinander in axialer Richtung verschoben werden. Des Weiteren besteht die Möglichkeit, dass für aufeinanderfolgende Positionierungen einer Lichtverteilung ein Intensitätsverlauf der Lichtverteilung verändert wird, indem eine Struktureigenschaft der zugehörigen eindimensionalen oder zweidimensionalen Struktur verändert wird. Beispielsweise kann eine Flankensteilheit der an das lokale Intensitätsminimum angrenzenden Intensitätsanstiegsbereiche verändert werden, indem eine Gitterkonstante der eindimensionalen Struktur oder ein Lochdurchmesser der zweidimensionalen Struktur verändert wird. Die Verfügbarkeit einer Mehrzahl von Lichtverteilungen kann genutzt werden, um eine Drift der Probe zu erfassen und zu kompensieren. Beispielsweise kann mittels zumindest einer Lichtverteilung ein Marker in der Probe erfasst werden. Alternativ kann eine Drift aus gleichsinnigen Änderungen der gemessenen Positionen der Moleküle in aufeinanderfolgenden Messungen ermittelt werden.

Die Steuereinheit 22 und die Auswerteeinheit 23 können von einer Kontrolleinheit 24 gesteuert werden. Über eine Benutzerschnittstelle 26 können gegebenenfalls Einstellungen der Steuereinheit 22, der Auswerteeinheit 23 oder der Kontrolleinheit 24 geändert werden. Die in der Vorrichtung 20 anfallenden Daten können bei Bedarf in einem Speicher 25 der Vorrichtung 20 abgelegt werden, beispielsweise für eine spätere Auswertung oder für eine Nutzung durch die Komponenten der Vorrichtung 20. Die Steuereinheit 22, die Auswerteeinheit 23 sowie die Kontrolleinheit 24 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Die Schnittstelle 21 kann auch in Form getrennter Ein- und Ausgänge implementiert sein.

Fig. 3 zeigt eine vereinfachte schematische Darstellung einer zweiten Ausführungsform einer Vorrichtung 30 zum parallelisierten Bestimmen von Positionen von zwei oder mehr gleichzeitig aktiven, voneinander beabstandeten Molekülen in einer oder mehreren Raumrichtungen in einer Probe. Die Vorrichtung 30 weist einen Prozessor 32 und einen Speicher 31 auf. Beispielsweise handelt es sich bei der Vorrichtung 30 um einen Mikrocontroller, einen Computer oder ein eingebettetes System. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 25, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

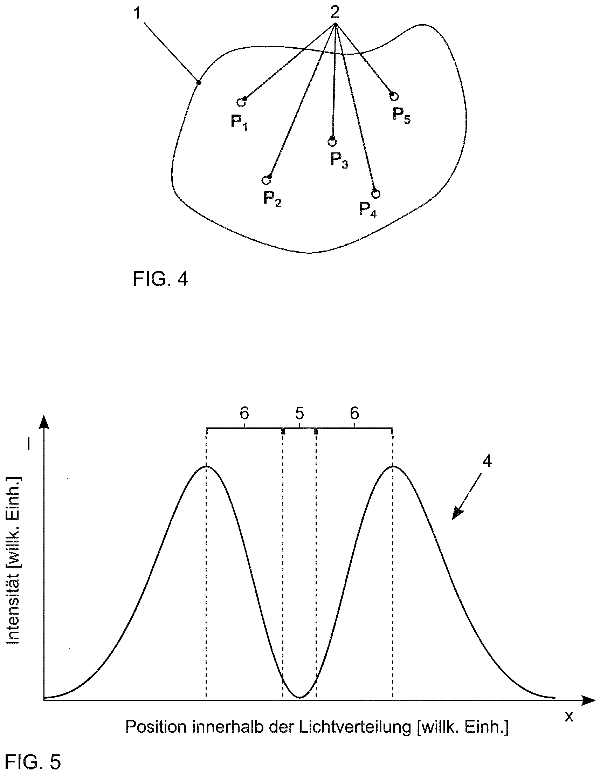

Fig. 4 zeigt eine Probe 1 mit einer Vielzahl von Molekülen 2. Beispielhaft sind fünf Moleküle 2 dargestellt, deren Positionen P₁ bis P₅ bestimmt werden sollen. Zu diesem Zweck sind die Moleküle 2 mit Fluorophoren markiert bzw. es handelt sich bei den Molekülen 2 um unmittelbar die Fluorophore. Die Fluorophore können mit Licht einer geeigneten Wellenlänge zur Emission von Photonen angeregt werden. Bei der MINFLUX-Mikroskopie erfolgt die Anregung der Fluorophore dabei jeweils so, dass ein zu lokalisierendes Fluorophor immer nah an einem oder in einem Minimum einer für die Anregung verwendeten Lichtverteilung platziert ist, wobei die Lichtverteilung benachbart zum Minimum einen Intensitätsanstiegsbereich aufweisen muss. Hierdurch wird eine bessere Ausnutzung der Fluoreszenzphotonen hinsichtlich der Gewinnung von Information über die Lage des jeweiligen emittierenden Fluorophors erreicht. Idealerweise ist das Minimum der Anregungslichtverteilung eine Nullstelle.

Fig. 5 zeigt einen beispielhaften Intensitätsverlauf über einen Querschnitt durch eine für die erfindungsgemäße Lösung geeignete Lichtverteilung 4. Aufgetragen ist die Intensität I gegenüber der Position innerhalb der Lichtverteilung 4, hier entlang der x-Achse. Der Intensitätsverlauf der Lichtverteilung 4 weist ein zentrales Intensitätsminimum 5 auf, an das beidseitig Intensitätsanstiegsbereiche 6 angrenzen. Realisiert werden kann eine solche Lichtverteilung 4 beispielsweise in Form einer Intensitätsverteilung in Form eines Donuts. In diesem Fall ist das zentrale Intensitätsminimum 5 allseitig von Intensitätsanstiegsbereichen 6 umgeben, sodass unmittelbar eine Positionsbestimmung in zwei Dimensionen möglich ist. Alternativ kann eine solche Lichtverteilung 4 aber auch als Interferenzmuster eines Streifengitters realisiert werden. In diesem Fall weist die Lichtverteilung 4 mehr als ein Intensitätsminimum 5 auf, von denen aber nur eines verwendet wird. Zudem grenzen nur an zwei gegenüberliegenden Seiten Intensitätsanstiegsbereiche 6 an das Intensitätsminimum 5, sodass für eine Positionsbestimmung in zwei Dimensionen ein entsprechend rotiertes Streifengitter erforderlich ist. Wie weiter unten erläutert wird, ist auch eine Positionsbestimmung in drei Dimensionen möglich, sofern die Intensitätsverteilung entlang der Strahlausbreitungsrichtung geeignet variiert.

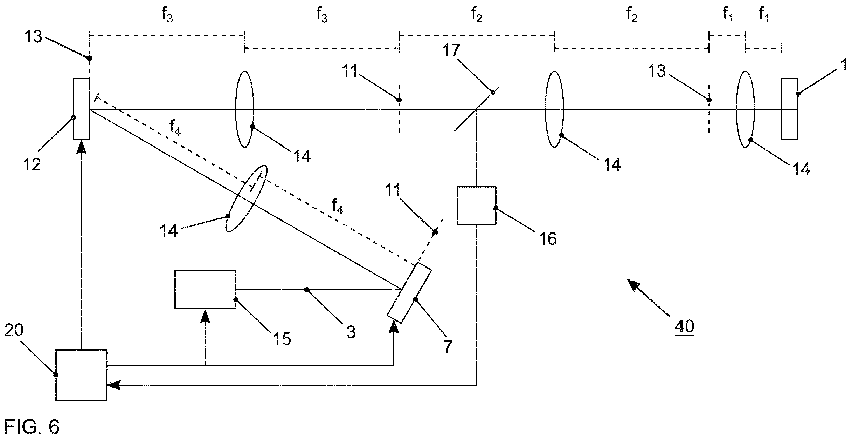

Fig. 6 zeigt einen beispielhaften prinzipiellen Aufbau eines Mikroskops 40, in dem eine erfindungsgemäße Lösung realisiert ist. Eine Lichtquelle 15, z.B. ein Laser, sendet kohärentes Licht 3 aus, beispielsweise mit einer Wellenlänge von 640 nm. Das kohärente Licht 3 trifft auf einen ersten Lichtmodulator 7, der in einer Bildebene 11 angeordnet ist und eine Vielzahl von schaltbaren Pixeln aufweist, z.B. 1920×1080 oder 2560×1600 Pixel. Mittels des ersten Lichtmodulators 7 kann eine Mehrzahl von unabhängig voneinander positionierbaren Lichtverteilungen erzeugt werden, indem die schaltbaren Pixel eindimensionale oder zweidimensionale Strukturen ausbilden. Das vom ersten Lichtmodulator 7 ausgehende Licht wird mit einer Linse 14 in eine Fourier-Ebene 13 abgebildet, in der sich ein zweiter Lichtmodulator 12 befindet. Der zweite Lichtmodulator dient zur Beeinflussung der Lichtverteilungen, indem er z.B. einzelne Beugungsordnungen ausblendet. Das vom zweiten Lichtmodulator 12 ausgehende Licht wird durch weitere Linsen 14 in die Probe abgebildet und kann dort für die Positionsbestimmung genutzt werden. Von den Molekülen in der Probe 1 emittierte Photonen werden dazu über einen Strahlteiler 17, z.B. einen wellenlängenselektiven Strahlteiler, in Richtung einer Detektoreinheit 16 gelenkt und von dieser erfasst. Bei der Detektoreinheit 16 kann es sich um eine Kamera handeln, z.B. mit 2048×2048 Pixeln. Unter Berücksichtigung des Nyquist-Kriteriums für die Abtastung werden für ein Sichtfeld von 64 µm×40 µm nur 640×400 Pixel benötigt, sodass eine schnellere Auslesung ermöglicht wird und auch die Nutzung mehrerer Wellenlängen in Betracht gezogen werden kann.

Der erste Lichtmodulator 7, der zweite Lichtmodulator 12 und die Lichtquelle 15 werden von einer erfindungsgemäßen Vorrichtung 20 zum Bestimmen der Positionen der Moleküle angesteuert, die zudem die Daten der Detektoreinheit 16 auswertet. Der Einfachheit halber sind weitere Komponenten des Lokalisationsmikroskops 40, z.B. für die Beeinflussung der Polarisation oder eine Bewegung der Linsen 14 oder der Probe 1, in Fig. 6 nicht dargestellt. Diese sind dem Fachmann bekannt und können ebenfalls von der Vorrichtung 20 gesteuert werden.

Ideal ist der in Fig. 6 gezeigte Aufbau, in dem die Elemente jeweils genau in Bildebenen 11 oder in Fourier-Ebenen 13 stehen. Möglich ist aber auch ein Aufbau, in dem beides nur näherungsweise erfüllt ist. Die tolerierbare Abweichung in axialer Richtung skaliert hier mit den Rayleighlängen der die Elemente umgebenden Optiken, die wiederum in Strahlrichtung gesehen nicht nur von der Strahlgüte des Lasers selbst abhängt, sondern auch von der Brennweite der vorgelagerten Optik abhängt bzw. aus Richtung der Objektebene gesehen, von der in Strahlrichtung nachgelagerten Optik abhängt.

In der Praxis ist es am einfachsten realisierbar, den zweiten Lichtmodulator 12, der als Raumfilter dient, in eine Fokalebene der Linse 14 nach dem ersten Lichtmodulator 7 zu stellen und außerdem den ersten Lichtmodulator 7 in eine Bildebene zur Objektebene zu stellen. Abweichungen vom Idealzustand an anderen Stellen können im Grunde leichter toleriert werden, aber es ist natürlich sehr einfach, den Aufbau von 7 über die erste Linse 14 bis zum Raumfilter 12 ideal aufzubauen.

Typischerweise sind STED-Mikroskope aufgebaut aus einem Mikroskopstativ mit einem eingebauten Objektiv und einer zugehörigen Tubus-Linse. Dabei ist bekannt, an welcher Stelle die (virtuelle) hintere Fokalebene liegt. Häufig wird diese in der Praxis als Pupillenebene oder einfach Pupille bezeichnet. Diese Ebene ist die Ebene, auf die die weitere Optik bezogen werden muss, d.h. wenn in der Objektebene kollimiert beleuchtet werden soll, dann muss der einfallende Strahl in diese Ebene, die dann am Ende innerhalb der geometrischen Abmessungen des Objektivs liegt oder jedenfalls liegen kann, fokussiert werden, d.h. er muss so eingerichtet werden, dass er in Abwesenheit des Objektivs an dieser Stelle einen Fokus bilden würde. Gleichzeitig ist diese Ebene die Ebene, in der die Feldverteilung vorliegen soll, deren Fouriertransfomierte im Objekt vorliegen soll. In der Praxis kann man, wenn das Objektiv ausgebaut ist, in diese Ebene eine Punktquelle stellen und diese durch die Tubus-Linse abbilden. Man erhält dann genau dort, wohin die Punktquelle abgebildet wird, eine zur Fourier-Ebene konjugierte Ebene, was gerade wieder eine Fourier-Ebene ist. Es ist dann leicht, weitere Fourier-Ebenen 13 bzw. Bildebenen 11 zu bestimmen.

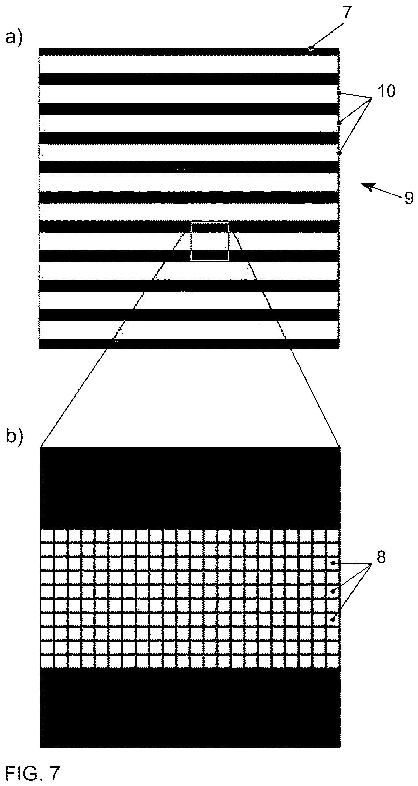

Fig. 7 veranschaulicht die Realisierung einer Struktur 9 mittels eines Lichtmodulators 7 mit einer Vielzahl von Pixeln 8. Dabei zeigt Fig. 7a) eine Struktur 9 mit einer Vielzahl von Strukturelementen 10, in diesem Fall ein Streifengitter. Bei den Strukturelementen 10 handelt es sich daher um die einzelnen Gitterlinien. Fig. 7b) zeigt einen vergrößerten Ausschnitt einer einzelnen Gitterlinie. Die Gitterlinie setzt sich aus einer Vielzahl von Pixeln 8 des Lichtmodulators 7 zusammen, d.h. die Abmessungen der Strukturelemente 10 sind in beiden Dimensionen größer als die Größe der Pixel 8. Zum Positionieren der Lichtverteilungen werden die vom Lichtmodulator 7 realisierten Strukturen 9 verschoben, d.h. die einzelnen Strukturelemente 10 werden hier um ganzzahlige Vielfache der Pixelgröße verschoben. Die minimale Verschiebung einer Struktur ist bei diesem binären Lichtmodulator 7 durch die Pixelgröße vorgegeben und somit kleiner als die Abmessung der Strukturelemente 10. Subpixel Verschiebungen können beispielsweise durch schräge Muster (Aliasing-Effekte), perforierte Muster oder mehrstufige bzw. analoge Modulatoren, ggf. in Kombination mit zusätzlicher Fourier-Filterung erreicht werden.

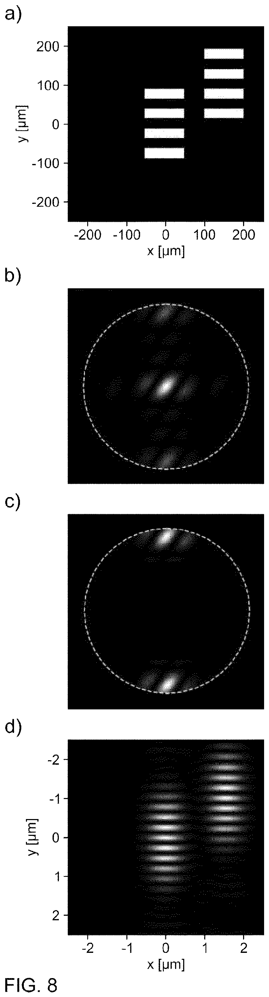

Fig. 8 zeigt ein erstes Beispiel für die Erzeugung mehrerer unabhängig voneinander positionierbarer Lichtverteilungen. Dabei zeigt Fig. 8a) die mit dem ersten Lichtmodulator realisierten Strukturen, in diesem Fall zwei Streifengitter mit jeweils vier Gitterlinien. Fig. 8b) zeigt das zugehörige Interferenzmuster in der Fourier-Ebene. Dort wird in diesem Beispiel die 0. Ordnung des Interferenzmusters vom zweiten Lichtmodulator geblockt, was in Fig. 8c) dargestellt ist. Im weiteren Verlauf interferieren die +1. Ordnung und die -1. Ordnung des Interferenzmusters, was in der Ebene der Probe, d.h. der der xy-Ebene, zu den in Fig. 8d) gezeigten Interferenzmustern führt. Für die Positionsbestimmung kann jeweils insbesondere das ±1. Intensitätsminimum mit den daran angrenzenden Intensitätsmaxima genutzt werden, d.h. dem 0. und dem ±1. Intensitätsmaximum, die annähernd die gleiche maximale Intensität aufweisen.

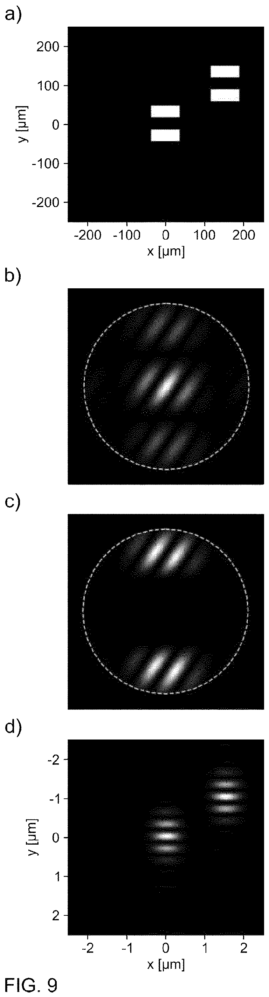

Fig. 9 zeigt ein zweites Beispiel für die Erzeugung mehrerer unabhängig voneinander positionierbarer Lichtverteilungen. Dabei zeigt Fig. 9a) die mit dem ersten Lichtmodulator realisierten Strukturen, in diesem Fall zwei Streifengitter mit jeweils nur zwei Gitterlinien. Die lateralen Abmessungen der Streifengitter sind kleiner als beim in Fig. 8 gezeigten Beispiel. Fig. 9b) zeigt wiederum das zugehörige Interferenzmuster in der Fourier-Ebene. Dort wird wie zuvor die 0. Ordnung des Interferenzmusters vom zweiten Lichtmodulator geblockt, was in Fig. 9c) dargestellt ist. Im weiteren Verlauf interferieren die +1. Ordnung und die -1. Ordnung des Interferenzmusters, was in der der Ebene der Probe zu den in Fig. 9d) gezeigten Interferenzmustern führt. Für die Positionsbestimmung kann wiederum insbesondere das ±1. Intensitätsminimum mit den daran angrenzenden 0. und ±1.Intensitätsmaxima genutzt werden. Zwar haben diese Intensitätsmaxima unterschiedliche maximale Intensitäten, die Abweichungen führen jedoch noch nicht zu einer Beeinträchtigung der Positionsbestimmung.

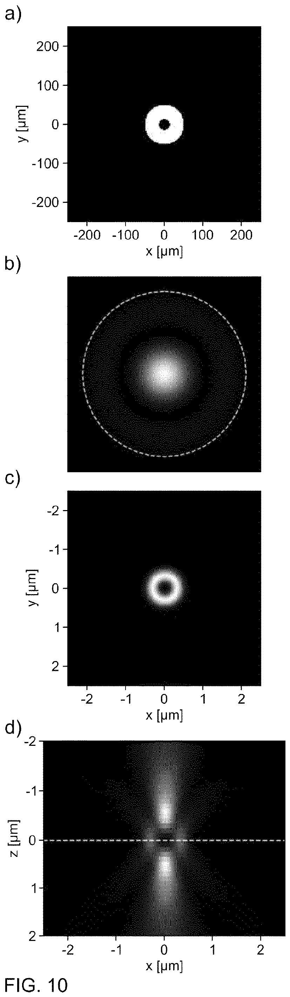

Fig. 10 zeigt ein Beispiel für die Erzeugung einer Lichtverteilung in Form eines Bottle Beams. Dabei zeigt Fig. 10a) die mit dem ersten Lichtmodulator realisierte Struktur, in diesem Fall eine Ringstruktur. Fig. 10b) zeigt die zugehörige Situation in der Fourier-Ebene. In der Ebene der Probe ergibt sich das in Fig. 10c) gezeigte Bild. Das zentrale Intensitätsminimum ist allseitig von einem Intensitätsmaximum umgeben. In axialer Richtung, d.h. in Strahlausbreitungsrichtung, ergibt sich der in Fig. 10d) als Schnitt in der xz-Ebene gezeigte Intensitätsverlauf. Wie man gut sehen kann, weist die Lichtverteilung auch in axialer Richtung ein Intensitätsminimum auf, an das Intensitätsanstiegsbereiche angrenzen. Die Lichtverteilung erlaubt somit eine Positionsbestimmung in drei Dimensionen. Dazu kann z.B. die Probe in axialer Richtung verfahren werden. Alternativ kann ein zusätzliches dynamisch fokussierendes Element im Strahlengang angeordnet sein, mit dem die Lichtverteilungen in axialer Richtung verschoben werden können, z.B. ein deformierbarer Spiegel.

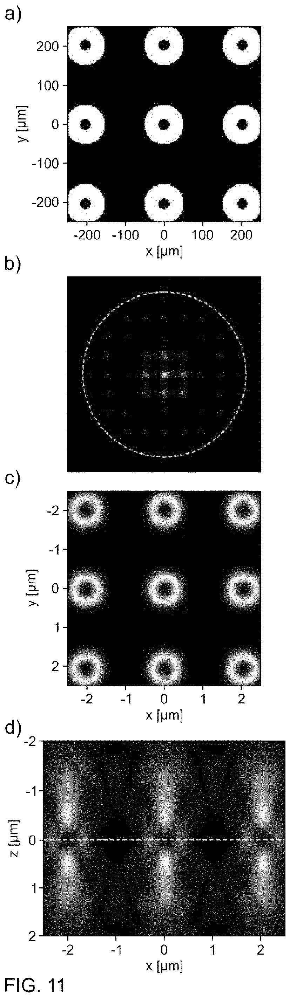

Fig. 11 zeigt ein Beispiel für die Erzeugung mehrerer unabhängig voneinander positionierbarer Lichtverteilungen in Form von Bottle Beams. Dabei zeigt Fig. 11a) die mit dem ersten Lichtmodulator realisierte Struktur, in diesem Fall neun unabhängig voneinander positionierbare Ringstrukturen. Fig. 11b) zeigt die zugehörige Situation in der Fourier-Ebene. In der Ebene der Probe ergibt sich das in Fig. 11c) gezeigte Bild. Bei allen neun Lichtverteilungen ist das zentrale Intensitätsminimum allseitig von einem Intensitätsmaximum umgeben. In axialer Richtung ergibt sich der in Fig. 11d) als Schnitt in der xz-Ebene gezeigte Intensitätsverlauf. Wie man gut sehen kann, weisen alle Lichtverteilungen auch in axialer Richtung ein Intensitätsminimum auf, an das Intensitätsanstiegsbereiche angrenzen, sodass eine Positionsbestimmung in drei Dimensionen möglich ist.

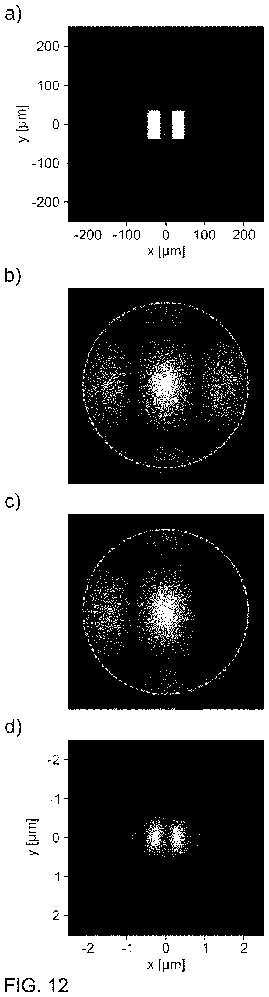

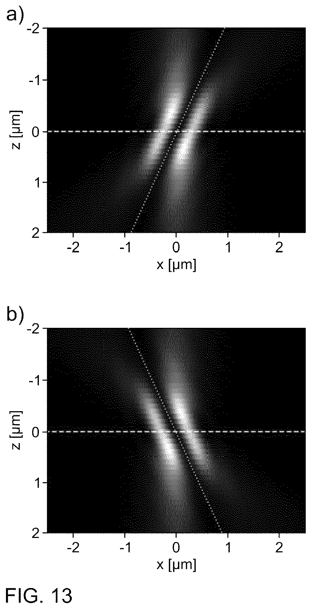

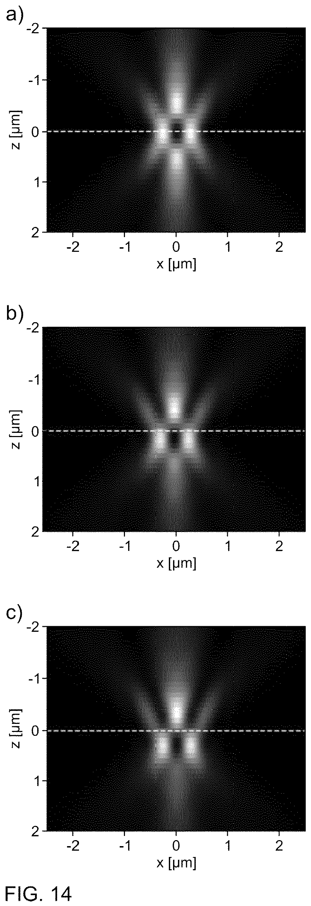

Fig. 12 zeigt ein Beispiel für die Erzeugung einer Lichtverteilung durch eine zeitliche Überlagerung verschiedener Teil-Lichtverteilungen. Dabei zeigt Fig. 12a) die mit dem ersten Lichtmodulator realisierte Struktur, in diesem Fall ein Streifengitter mit zwei Gitterlinien. Fig. 12b) zeigt das zugehörige Interferenzmuster in der Fourier-Ebene. Dort wird in diesem Beispiel die +1. Ordnung des Interferenzmusters vom zweiten Lichtmodulator geblockt, was in Fig. 12c) dargestellt ist. Im weiteren Verlauf interferieren die 0. Ordnung und die -1. Ordnung des Interferenzmusters, was in der Ebene der Probe, d.h. der der xy-Ebene, zu der in Fig. 12d) gezeigten Teil-Lichtverteilung führt. Wie man gut sehen kann, ergibt sich eine Lichtverteilung mit einem Intensitätsminimum und beidseitig daran angrenzenden Intensitätsmaxima. Analog dazu wird im Anschluss in der Fourier-Ebene die -1. Ordnung des Interferenzmusters vom zweiten Lichtmodulator geblockt, sodass im weiteren Verlauf die 0. Ordnung und die +1. Ordnung des Interferenzmusters interferieren. Interessant ist in diesem Fall der Intensitätsverlauf in axialer Richtung, der in Fig. 13 als Schnitt in der xz-Ebene dargestellt ist. Dabei zeigt Fig. 13a) den Intensitätsverlauf für die Interferenz zwischen 0. Ordnung -1. Ordnung des Interferenzmusters, Fig. 13b) den Intensitätsverlauf für die Interferenz zwischen 0. Ordnung +1. Ordnung des Interferenzmusters. Deutlich zu sehen ist, dass die Teil-Lichtverteilungen jeweils gewissermaßen eine geneigte Achse aufweisen, die in Fig. 13a) und Fig. 13b) durch eine gepunktete Linie angedeutet ist. Überlagert man die beiden Teil-Lichtverteilungen zeitlich, d.h. strahlt man sie mit einem kurzen zeitlichen Abstand in die gleiche Position der Probe, ergibt sich der in Fig. 14a) gezeigte Intensitätsverlauf, wiederum als Schnitt in der xz-Ebene dargestellt. Wie man gut sehen kann, weist die überlagerte Lichtverteilung auch in axialer Richtung ein Intensitätsminimum auf, an das Intensitätsanstiegsbereiche angrenzen. Wie in Fig. 14b) und Fig. 14c) zu sehen ist, lässt sich dieses Intensitätsminimum in axialer Richtung verschieben, indem die beiden Teil-Lichtverteilungen relativ zueinander in radialer Richtung verschoben werden.

### Referenzen

[1] F. Balzarotti et al.: "Nanometer resolution imaging and tracking of fluorescent molecules with minimal photon fluxes", Science, Vol. 355 (2017), S. 606-612.
[2] M. G. L. Gustafsson: "Surpassing the lateral resolution limit by a factor of two using structured illumination microscopy", Journal of Microscopy, Vol. 198 (2000), S. 82-87.
[3] M. G. L. Gustafsson: "Nonlinear structured-illumination microscopy: Wide-field fluorescence imaging with theoretically unlimited resolution", Proceedings of the National Academy of Sciences, Vol. 102 (2005), S. 13081-13086.
[4] L. Gu et al.: "Molecular resolution imaging by repetitive optical selective exposure", Nature Methods, Vol. 16 (2019), S. 1114-1118.
[5] L. Reymond et al.: "SIMPLE: Structured illumination based point localization estimator with enhanced precision", Optics Express, Vol. 27 (2019), S. 24578-24590.
[6] J. Cnossen et al.: "Localization microscopy at doubled precision with patterned illumination", Nature Methods, Vol. 17 (2020), S. 59-63.

### Bezugszeichenliste

- 1: Probe
- 2: Molekül
- 3: Kohärentes Licht
- 4: Lichtverteilung
- 5: Intensitätsminimum
- 6: Intensitätsanstiegsbereich
- 7: Erster Lichtmodulator
- 8: Pixel
- 9: Struktur
- 10: Strukturelement
- 11: Bildebene
- 12: Zweiter Lichtmodulator
- 13: Fourier-Ebene
- 14: Linse
- 15: Lichtquelle
- 16: Detektoreinheit
- 17: Strahlteiler
- 20: Vorrichtung
- 21: Schnittstelle
- 22: Steuereinheit
- 23: Auswerteeinheit
- 24: Kontrolleinheit
- 25: Speicher
- 26: Benutzerschnittstelle
- 30: Vorrichtung
- 31: Speicher
- 32: Prozessor
- 33: Eingang
- 34: Ausgang
- 40: Mikroskop
- Pᵢ: Position
- S1: Erzeugen einer Mehrzahl von Lichtverteilungen
- S2: Beleuchten von Molekülen mit jeweils einer Lichtverteilung
- S3: Positionieren der Lichtverteilungen unabhängig voneinander
- S4: Erfassen von emittierten Photonen für verschiedene Positionierungen der Lichtverteilungen
- S5: Ableiten der Positionen der Moleküle auf Basis der emittierten Photonen

## Patentansprüche

1. Verfahren zum parallelisierten Bestimmen von Positionen (Pᵢ) von zwei oder mehr gleichzeitig aktiven, voneinander beabstandeten Molekülen (2) in einer oder mehreren Raumrichtungen in einer Probe (1) mittels eines Lokalisationsmikroskops (40), wobei für das Bestimmen der Positionen (Pᵢ) der Moleküle (2) Lichtverteilungen (4) verwendet werden, die aufgrund von Interferenz kohärenten Lichts entstehen mit den Schritten:
- Erzeugen (S1) einer Mehrzahl von Lichtverteilungen (4) unter Verwendung eines ersten Lichtmodulators (7) mit einer Vielzahl von schaltbaren Pixeln (8), der in einer Bildebene (11) des Lokalisationsmikroskops (40) angeordnet ist, wobei jede Lichtverteilung (4) ein lokales Intensitätsminimum (5) und daran angrenzend Intensitätsanstiegsbereiche (6) aufweist;
- Beleuchten (S2) jedes der zwei oder mehr Moleküle (2) mit jeweils einer Lichtverteilung (4);
- für jede der Lichtverteilungen (4), Erfassen (S4) von durch die Moleküle (2) emittierten Photonen für verschiedene Positionierungen der Lichtverteilung (4), wobei die Lichtverteilungen (4) durch eine entsprechende Ansteuerung des ersten Lichtmodulators (7) unabhängig voneinander positioniert (S3) werden; und
- Ableiten (S5) der Positionen (Pᵢ) der Moleküle (2) auf Basis der für die verschiedenen Positionierungen der Lichtverteilungen (4) erfassten Photonen.

2. Verfahren gemäß Anspruch 1, wobei ein zweiter Lichtmodulator (12) zur Beeinflussung der Lichtverteilungen (4) in einer Fourier-Ebene (13) des Lokalisationsmikroskops (40) angeordnet ist.

3. Verfahren gemäß Anspruch 2, wobei der zweite Lichtmodulator (12) eingerichtet ist, einzelne Beugungsordnungen zu blockieren.

4. Verfahren gemäß einem der vorherigen Ansprüche, wobei der erste Lichtmodulator (7) ein Amplitudenmodulator oder ein Phasenmodulator ist, vorzugsweise ein zwischen zwei festen Zuständen schaltbarer Amplitudenmodulator oder Phasenmodulator.

5. Verfahren gemäß einem der vorherigen Ansprüche, wobei zum Erzeugen (S1) der Lichtverteilungen (4) mittels der schaltbaren Pixel (8) des ersten Lichtmodulators (7) eindimensionale Strukturen (9), vorzugsweise Gitterstrukturen, oder zweidimensionale Strukturen (9), vorzugsweise Ringstrukturen, ausgebildet werden.

6. Verfahren gemäß Anspruch 5, wobei zum Positionieren (S3) der Lichtverteilungen (4) die mittels der schaltbaren Pixel (8) des ersten Lichtmodulators (7) ausgebildeten Strukturen (9) verschoben werden.

7. Verfahren gemäß Anspruch 6, wobei Verschiebungen der Strukturen (9) kleiner sind als Abmessungen von Strukturelementen (10) der Strukturen (9), wobei die Abmessungen der Strukturelemente (10) der Strukturen (9) vorzugsweise in beiden Dimensionen größer sind als eine Größe der Pixel (8).

8. Verfahren gemäß einem der Ansprüche 5 bis 7, wobei für aufeinanderfolgende Positionsbestimmungen mit einer Lichtverteilung (4) ein Intensitätsverlauf der Lichtverteilung (4) verändert wird, indem eine Struktureigenschaft der zugehörigen eindimensionalen oder zweidimensionalen Struktur (9) verändert wird, wobei vorzugsweise eine Flankensteilheit der an das lokale Intensitätsminimum (5) angrenzenden Intensitätsanstiegsbereiche (6) verändert wird, indem eine Gitterkonstante und/oder ein Aspektverhältnis der eindimensionalen Struktur oder ein Lochdurchmesser der zweidimensionalen Struktur verändert wird.

9. Verfahren gemäß einem der vorherigen Ansprüche, wobei die Lichtverteilungen (4) aus einer zeitlichen Überlagerung verschiedener Teil-Lichtverteilungen resultieren, die ihrerseits vorzugsweise aus der Interferenz von verschiedenen Beugungsordnungen eines vom ersten Lichtmodulator (7) erzeugten Interferenzmusters resultieren.

10. Verfahren gemäß einem der vorherigen Ansprüche, wobei mittels zumindest einer Lichtverteilung (4) ein Marker (6) in der Probe (1) zum Ermitteln einer Drift erfasst wird und/oder wobei aus gleichsinnigen Änderungen der gemessenen Positionen (Pᵢ) der Moleküle (2) in aufeinanderfolgenden Messungen eine Drift ermittelt wird.

11. Verfahren gemäß einem der vorherigen Ansprüche, wobei die Lichtverteilungen (4) in der Probe (1) laterale Abmessungen im Bereich von 0,5 µm bis 4 µm aufweisen.

12. Verfahren gemäß einem der vorherigen Ansprüche, wobei die durch die Moleküle (2) emittierten Photonen mit einer Kamera oder einem Array von Photonenzählern erfasst werden (S4).

13. Computerprogramm mit Instruktionen, die bei Ausführung durch einen Computer den Computer zur Ausführung der Schritte eines Verfahrens gemäß einem der Ansprüche 1 bis 12 zum parallelisierten Bestimmen von Positionen (Pᵢ) von zwei oder mehr gleichzeitig aktiven, voneinander beabstandeten Molekülen (2) in einer oder mehreren Raumrichtungen in einer Probe (1) mittels eines Lokalisationsmikroskops (40) veranlassen.

14. Vorrichtung (20) zum parallelisierten Bestimmen von Positionen (Pᵢ) von zwei oder mehr gleichzeitig aktiven, voneinander beabstandeten Molekülen (2) in einer oder mehreren Raumrichtungen in einer Probe (1) mittels eines Lokalisationsmikroskops (40), wobei für das Bestimmen der Positionen (Pᵢ) der Moleküle (2) Lichtverteilungen (4) verwendet werden, die aufgrund von Interferenz kohärenten Lichts entstehen, mit:
- einer Steuereinheit (22), die eingerichtet ist zum Ansteuern eines ersten Lichtmodulators (7) mit einer Vielzahl von schaltbaren Pixeln (8), der in einer Bildebene (11) des Lokalisationsmikroskops (40) angeordnet ist, zum Erzeugen (S1) einer Mehrzahl von durch eine entsprechende Ansteuerung des ersten Lichtmodulators (7) unabhängig voneinander positionierbaren Lichtverteilungen (4), wobei jede Lichtverteilung (4) ein lokales Intensitätsminimum (5) und daran angrenzend Intensitätsanstiegsbereiche (6) aufweist; und
- einer Auswerteeinheit (23), die eingerichtet ist zum Ableiten (S5) der Positionen (Pᵢ) der Moleküle (2) auf Basis von durch die Moleküle (2) für jede der Lichtverteilungen (4) emittierten Photonen für verschiedene Positionierungen der jeweiligen Lichtverteilungen (4).

15. Mikroskop (40), mit:
- einer Lichtquelle (15) zum Erzeugen von kohärentem Licht (3);
- einem ersten Lichtmodulator (7) mit einer Vielzahl von schaltbaren Pixeln (8), der in einer Bildebene (11) des Mikroskops (40) angeordnet ist, zum gleichzeitigen Erzeugen (S1) einer Mehrzahl von Lichtverteilungen (4), die aufgrund von Interferenz kohärenten Lichts entstehen, wobei jede Lichtverteilung (4) ein lokales Intensitätsminimum (5) und daran angrenzend Intensitätsanstiegsbereiche (6) aufweist;
- optischen Mitteln (14) zum Beleuchten (S2) von zwei oder mehr gleichzeitig aktiven, voneinander beabstandeten Molekülen (2) in einer Probe (1) mit jeweils einer Lichtverteilung (4);
- einer Detektoreinheit (16) zum Erfassen (S4) von durch die Moleküle (2) für jede der Lichtverteilungen (4) emittierten Photonen für verschiedene Positionierungen der Lichtverteilungen (4), wobei die Lichtverteilungen (4) durch eine entsprechende Ansteuerung des ersten Lichtmodulators (7) unabhängig voneinander positionierbar sind; und
- einer Vorrichtung (20) gemäß Anspruch 20 zum parallelisierten Bestimmen von Positionen (Pᵢ) der zwei oder mehr Moleküle (2) in einer oder mehreren Raumrichtungen.

## Claims

1. A method for parallelized determination of positions (Pᵢ) of two or more simultaneously active, spaced-apart molecules (2) in one or more spatial directions in a sample (1) using a localization microscope (40), wherein light distributions (4) arising due to interference of coherent light are used for determining the positions (Pᵢ) of the molecules (2), comprising the steps of:
- generating (S1) a plurality of light distributions (4) using a first light modulator (7) having a plurality of switchable pixels (8) disposed in an image plane (11) of the localization microscope (40), each light distribution (4) having a local intensity minimum (5) and regions (6) with an intensity increase adjacent thereto;
- illuminating (S2) each of the two or more molecules (2) with one light distribution (4) each;
- for each of the light distributions (4), detecting (S4) photons emitted by the molecules (2) for different positionings of the light distribution (4), the light distributions (4) being positioned (S3) independently of each other by controlling the light modulator (7) accordingly; and
- deriving (S5) the positions (Pᵢ) of the molecules (2) based on the photons detected for the different positionings of the light distributions (4).

2. The method according to claim 1, wherein a second light modulator (12) for influencing the light distributions (4) is arranged in a Fourier plane (13) of the localization microscope (40).

3. The method according to claim 2, wherein the second light modulator (12) is arranged to block individual diffraction orders.

4. The method according to any one of the preceding claims, wherein the first light modulator (7) is an amplitude modulator or a phase modulator, preferably an amplitude modulator or a phase modulator that is switchable between two fixed states.

5. The method according to any one of the preceding claims, wherein one-dimensional structures (9), preferably grating structures, or two-dimensional structures (9), preferably ring structures, are formed by means of the switchable pixels (8) of the first light modulator (7) for generating (S1) the light distributions (4).

6. The method according to claim 5, wherein the structures (9) formed by means of the switchable pixels (8) of the first light modulator (7) are shifted for positioning (S3) the light distributions (4).

7. The method according to claim 6, wherein displacements of the structures (9) are preferably smaller than dimensions of structural elements (10) of the structures (9), wherein the dimensions of the structural elements (10) of the structures (9) are in both dimensions larger than a size of the pixels (8).

8. The method according to any one of claims 5 to 7, wherein for successive position determinations with a light distribution (4), an intensity profile of the light distribution (4) is changed by changing a structural property of the associated one-dimensional or two-dimensional structure (9), wherein preferably an edge steepness of the regions (6) with an intensity increase adjacent to the local intensity minimum (5) is changed by changing a grating constant and/or an aspect ratio of the one-dimensional structure or a hole diameter of the two-dimensional structure.

9. The method according to any one of the preceding claims, wherein the light distributions (4) result from a temporal superposition of different partial light distributions, which in turn preferably result from the interference of different diffraction orders of an interference pattern generated by the first light modulator (7).

10. The method according to any one of the preceding claims, wherein a marker (6) in the sample (1) is detected using at least one light distribution (4) for determining a drift, and/or wherein a drift is determined from changes in the same direction in the measured positions (Pᵢ) of molecules (2) in successive measurements.

11. The method according to any one of the preceding claims, wherein the light distributions (4) in the sample (1) have lateral dimensions in the range of 0.5 µm to 4 µm.

12. The method according to any one of the preceding claims, wherein the photons emitted by the molecules (2) are detected (S4) using a camera or an array of photon counters.

13. A computer program comprising instructions which, when executed by a computer, cause the computer to perform the steps of a method according to any one of claims 1 to 12 for parallelized determination of positions (Pᵢ) of two or more simultaneously active, spaced-apart molecules (2) in one or more spatial directions in a sample (1) by means of a localization microscope (40).

14. An apparatus (20) for parallelized determination of positions (Pᵢ) of two or more simultaneously active, spaced-apart molecules (2) in one or more spatial directions in a sample (1) using a localization microscope (40), wherein light distributions (4) arising due to interference of coherent light are used for determining the positions (Pᵢ) of the molecules (2), comprising:
- an operating unit (22) adapted to drive a first light modulator (7) having a plurality of switchable pixels (8), which is disposed in an image plane (11) of the localization microscope (40), to generate (S1) a plurality of light distributions (4) that are positionable independently of each other by controlling the light modulator (7) accordingly, each light distribution (4) having a local intensity minimum (5) and regions (6) with an intensity increase adjacent thereto; and
- an evaluation unit (23) adapted to derive (S5) the positions (Pᵢ) of the molecules (2) on the basis of photons emitted by the molecules (2) for each of the light distributions (4) for different positionings of the respective light distributions (4).

15. A microscope (40), with:
- a light source (15) for generating coherent light (3);
- a first light modulator (7) having a plurality of switchable pixels (8), which is disposed in an image plane (11) of the microscope (40) for generating (S1) a plurality of light distributions (4) arising due to interference of coherent light, each light distribution (4) having a local intensity minimum (5) and regions (6) with an intensity increase adjacent thereto;
- optical means (14) for illuminating (S2) two or more simultaneously active, spaced-apart molecules (2) in a sample (1) with one light distribution (4) each;
- a detector unit (16) for detecting (S4) photons emitted by the molecules (2) for each of the light distributions (4) for different positionings of the light distributions (4), the light distributions (4) being positionable independently of each other by controlling the light modulator (7) accordingly; and
- an apparatus (20) according to claim 20 for determining positions (Pᵢ) of the two or more molecules (2) in one or more spatial directions.

## Revendications

1. Procédé pour la détermination parallélisée de positions (Pᵢ) de deux ou plusieurs molécules (2) actives simultanément, séparées les unes des autres, dans une ou plusieurs directions spatiales dans un échantillon (1) au moyen d'un microscope de localisation (40), dans lequel, pour la détermination des positions (Pᵢ) des molécules (2), on emploie des distributions de lumière (4) qui sont générées en raison d'interférences de lumière cohérente, avec les étapes :
- création (S1) d'une multiplicité de distributions de lumière (4) moyennant l'emploi d'un premier modulateur de lumière (7) avec une multiplicité de pixels (8) commutables, qui est disposé dans un plan d'image (11) du microscope de localisation (40), dans lequel chaque distribution de lumière (4) présente un minimum d'intensité (5) local et des zones d'intensité croissante (6) lui étant adjacentes ;
- éclairage (S2) de chacune des deux ou plusieurs molécules (2) avec respectivement une distribution de lumière (4) ;
- pour chacune des distributions de lumière (4), détection (S4) de photons émis par les molécules (2) pour différentes positions de la distribution de lumière (4), dans lequel les distributions de lumière (4) sont positionnées (S3) de manière indépendante les unes des autres par un pilotage correspondant du premier modulateur de lumière (7) ; et
- dérivation (S5) des positions (Pᵢ) des molécules (2) sur la base des photons détectés pour les différents positionnements de la distribution de lumière (4).

2. Procédé selon la revendication 1, dans lequel un deuxième modulateur de lumière (12) est disposé dans un plan de Fourier (13) du microscope de localisation (40) pour agir sur les distributions de lumière (4).

3. Procédé selon la revendication 2, dans lequel le deuxième modulateur de lumière (12) est conçu pour bloquer des ordres de diffraction individuels.

4. Procédé selon l'une des revendications précédentes, dans lequel le premier modulateur de lumière (7) est un modulateur d'amplitude ou un modulateur de phase, de préférence un modulateur d'amplitude ou un modulateur de phase commutable entre deux états fixes.

5. Procédé selon l'une des revendications précédentes, dans lequel, pour la création (S1) des distributions de lumière (4) au moyen des pixels (8) commutables du premier modulateur de lumière (7), des structures (9) monodimensionnelles, de préférence des structures de grille, ou des structures (9) bidimensionnelles, de préférence des structures annulaires, sont formées.

6. Procédé selon la revendication 5, dans lequel, pour le positionnement (S3) des distributions de lumière (4), les structures (9) formées au moyen des pixels (8) commutables du premier modulateur de lumière (7) sont déplacées.

7. Procédé selon la revendication 6, dans lequel des déplacements des structures (9) sont plus petits que des dimensions d'éléments de structure (10) des structures (9), dans lequel les dimensions des éléments de structure (10) des structures (9) sont de préférence plus grandes dans les deux dimensions qu'une taille des pixels (8).

8. Procédé selon l'une des revendications 5 à 7, dans lequel, pour des déterminations de positions successives avec une distribution de lumière (4), une évolution d'intensité de la distribution de lumière (4) est modifiée en ce qu'une propriété structurelle de la structure (9) monodimensionnelle ou bidimensionnelle correspondante est modifiée, dans lequel, de préférence une pente de flanc des zones d'intensité croissante (6) adjacentes du minimum d'intensité (5) local est modifiée en ce qu'une constante de grille, et/ou un rapport d'aspect de la structure monodimensionnelle, ou un diamètre de trou de la structure bidimensionnelle est modifié(e).

9. Procédé selon l'une des revendications précédentes, dans lequel les distributions de lumière (4) résultent d'une superposition temporelle de différentes distributions partielles de lumière qui, de leur part, résultent de préférence de l'interférence de différents ordres de diffraction d'un motif d'interférence généré par le premier modulateur de lumière (7).

10. Procédé selon l'une des revendications précédentes, dans lequel, au moyen d'au moins une distribution de lumière (4), un marqueur (6) est détecté dans l'échantillon (1) pour la détermination d'une dérive, et/ou dans lequel une dérive est déterminée à partir de modifications similaires des positions (Pᵢ) de la molécule (2) mesurées dans des mesures successives.

11. Procédé selon l'une des revendications précédentes, dans lequel les distributions de lumière (4) dans l'échantillon (1) présentent des dimensions latérales dans la plage de 0,5 µm à 4 µm.

12. Procédé selon l'une des revendications précédentes, dans lequel les photons émis par les molécules (2) sont détectés (S4) avec une caméra ou un réseau de compteurs de photons.

13. Programme informatique avec des instructions qui, lors de l'exécution par l'ordinateur font en sorte que l'ordinateur exécute les étapes d'un procédé selon l'une des revendications 1 à 12 pour la détermination parallélisée de positions (Pᵢ) de deux ou plusieurs molécules (2) actives simultanément, séparées les unes des autres, dans une ou plusieurs directions spatiales dans un échantillon (1) au moyen d'un microscope de localisation (40).

14. Dispositif (20) pour la détermination parallélisée de positions (Pᵢ) de deux ou plusieurs molécules (2) actives simultanément, séparées les unes des autres, dans une ou plusieurs directions spatiales dans un échantillon (1) au moyen d'un microscope de localisation (40), dans lequel, pour la détermination des positions (Pᵢ) des molécules (2), on emploie des distributions de lumière (4) qui sont générées en raison d'interférences de lumière cohérente, avec :
- une unité de commande (22), qui est conçue pour la mise en œuvre d'un premier modulateur de lumière (7) avec une multiplicité de pixels (8) commutables qui est disposé dans un plan d'image (11) du microscope de localisation (40) pour la création (S1) d'une multiplicité de distributions de lumière (4) positionnables de manière indépendante les unes des autres par une mise en œuvre correspondante du premier modulateur de lumières (7), dans lequel chaque distribution de lumière (4) présente un minimum d'intensité (5) local et des zones d'intensité croissante (6) lui étant adjacentes ; et
- une unité d'exploitation (23), qui est conçue pour la dérivation (S5) des positions (Pᵢ) des molécules (2) sur la base de photons émis par les molécules (2) pour chacune des distributions de lumière (4) pour différents positionnements des distributions de lumière (4) respectives.

15. Microscope (40), avec :
- une source de lumière (15) pour la création de lumière cohérente (3) ;
- un premier modulateur de lumière (7) avec une multiplicité de pixels (8) commutables, qui est disposé dans un plan d'image (11) du microscope (40), pour la création (S1) simultanée d'une multiplicité de distributions de lumière (4) qui sont générées en raison d'interférences de lumière cohérente, dans lequel chaque distribution de lumière (4) présente un minimum d'intensité (5) local et des zones d'intensité croissante (6) lui étant adjacentes ;
- des moyens optiques (14) pour l'éclairage (S2) de deux ou plusieurs molécules (2) actives simultanément, séparées les unes des autres, dans un échantillon (1) avec respectivement une distribution de lumière (4) ;
- une unité de détection (16) pour la détection (S4) de photons émis par les molécules (2) pour chacune des distributions de lumière (4) pour différents positionnements des distributions de lumière (4), dans lequel les distributions de lumière (4) sont positionnables de manière indépendante les unes des autres par une mise en œuvre correspondante du premier modulateur de lumière (7) ; et
- un dispositif (20) selon la revendication 20 pour la détermination parallélisée de positions (Pᵢ) des deux ou plusieurs molécules (2) dans une ou plusieurs directions spatiales.
